# EUROPÄISCHE PATENTANMELDUNG

(11) **EP 3 764 056 A1**
(43) Veröffentlichungstag der Anmeldung: **13.01.2021**
(21) Anmeldenummer: 20175476.9
(22) Anmeldetag: 19.05.2020
(51) Int. Cl.: G01B 11/24, G01B 11/06

(54) **CHROMATISCH-KONFOKALE MESSVORRICHTUNG**

(30) Priorität: 09.07.2019 DE 102019118600
(71) Anmelder: Precitec Optronik GmbH, 63263 Neu-Isenburg (DE)
(72) Erfinder: Schönleber, Martin, 63263 Neu-Isenburg (DE)
(74) Vertreter: Ostertag & Partner Patentanwälte mbB

(57) **Zusammenfassung**

Eine chromatisch-konfokale Messvorrichtung zur Messung von Abständen und/oder Dicken von mehreren Stellen hat eine Lichtquelle (1), welche durch eine Lichtaustrittsfläche polychromatisches Messlicht (2) emittiert, und mindestens eine erste konfokale Apertur (3, 10), durch die das Messlicht (2) tritt und die eine Mehrzahl von punktförmigen Öffnungen oder mindestens eine schlitzförmige Öffnung umfasst. Zur Messvorrichtung gehört ferner eine Abbildungsoptik (4, 5), welche dazu eingerichtet ist, eine chromatische Fokusverschiebung des Messlichts hervorzurufen und die erste konfokale Apertur (3) in ein Messvolumen abzubilden, wobei verschiedene Wellenlängen in verschiedenen Höhen fokussiert sind. Eine erste Empfangs- und Auswerteeinheit (8) ist ausgebildet, um die Intensität des vom Messobjekt reflektierten Messlichts in Abhängigkeit der Wellenlänge und der transversalen Position der Reflexionsstelle auf dem Messobjekt zu messen und daraus Abstände und/oder Dicken von mehreren Stellen oder eines in mindestens eine Raumrichtung ausgedehnten Bereichs des Messobjekts (6) zu bestimmen. Erfindungsgemäß ist die Lichtquelle (1) eine lasergepumpte Luminophor-basierte Lichtquelle und die Austrittsfläche länglich.

## Beschreibung

### HINTERGRUND DER ERFINDUNG

### 1. Gebiet der Erfindung

Die Erfindung betrifft eine chromatisch-konfokale Messvorrichtung zur simultanen Messung von Abständen und/oder Dicken von mehreren Stellen oder eines in mindestens einer Raumrichtung ausgedehnten Bereichs eines Messobjekts. Die Messvorrichtung umfasst eine Lichtquelle, welche durch eine Lichtaustrittsfläche polychromatisches Messlicht emittiert, und mindestens eine erste konfokale Apertur, durch die das Messlicht tritt. Die erste konfokale Apertur umfasst eine Mehrzahl von punktförmigen Öffnungen oder mindestens eine schlitzförmige Öffnung. Die Messvorrichtung umfasst auch eine Abbildungsoptik, welche dazu eingerichtet ist, eine chromatische Fokusverschiebung des Messlichts hervorzurufen und die erste konfokale Apertur in ein Messvolumen abzubilden, wobei verschiedene Wellenlängen in verschiedenen Höhen fokussiert sind, sowie eine erste Empfangs- und Auswerteeinheit, welche ausgebildet ist, um die Intensität des vom Messobjekt reflektierten Messlichts in Abhängigkeit der Wellenlänge und der transversalen Position der Reflexionsstelle auf dem Messobjekt zu messen und daraus Abstände und/oder Dicken von mehreren Stellen oder eines in mindestens eine Raumrichtung ausgedehnten Bereichs des Messobjekts zu bestimmen.

### 2. Beschreibung des Standes der Technik

Aus der WO 2016/092348 A1 ist eine chromatisch-konfokale Höhenmessvorrichtung bekannt, welche eine Mehrzahl von in einer Linie angeordneten Messpunkten aufweist, um das Messvolumen quer zur optischen Achse zu vergrößern.

In der DE 10 2018 114 860 A1 ist außerdem eine chromatisch-konfokale Messeinrichtung beschrieben, welche Schlitzblenden als konfokale Blenden umfasst, so dass ein kontinuierlicher, ausgedehnter Bereich des Messobjekts entlang der Projektion der Blende vermessen werden kann.

Bei bekannten Messeinrichtungen besteht der Nachteil, dass entweder Licht einer punktförmigen Lichtquelle auf das gesamte Messvolumen verteilt werden muss, was zu einer geringen Intensität führt und damit zu einer Einschränkung der möglichen Messrate, oder aber eine große Mehrzahl von punktförmigen Lichtquellen eingesetzt werden muss, was zu hohen Kosten führt. Bekannte Lichtquellen haben zu wenig Ausgangsleistung, um einen chromatisch-konfokalen Liniendetektor mit hoher Frequenz zu betreiben.

### ZUSAMMENFASSUNG DER ERFINDUNG

Es ist daher Aufgabe der Erfindung, eine kostengünstige Lichtquelle anzugeben, welche zum Betrieb eines chromatisch-konfokalen Liniendetektors mit hoher Frequenz geeignet ist.

Diese Aufgabe wird gelöst durch die Bereitstellung einer Luminophor-basierten Lichtquelle, deren Lichtaustrittsfläche länglich ist.

Unter einer Luminophor-basierten Lichtquelle wird eine Lichtquelle verstanden, in welcher mittels einer Pumpquelle (typischerweise Laser oder LED) ein Leuchtstoff (Luminophor) angeregt wird, welcher durch einen physikalischen Prozess, insbesondere Phosphoreszenz, Fluoreszenz oder Szintillation, Licht aussendet. Ein Luminophor ist hier allgemein eine strahlungskonvertierende Substanz.

Eine längliche Austrittsfläche bedeutet, dass die Fläche in einer Raumrichtung wesentlich länger ist als in die andere, insbesondere um mindestens eine Größenordnung.

Luminophor-basierten Lichtquellen an sich sind bekannt, jedoch keine, welche für diese Anwendung geeignet wäre.

Erfindungsgemäß wird also eine Messvorrichtung oben genannter Art bereitgestellt, deren Lichtquelle eine lasergepumpte Luminophor-basierte Lichtquelle ist und die Austrittsfläche der Lichtquelle länglich ist. Dies hat den Vorteil, dass die Lichtquelle die gesamte konfokale Apertur ausleuchten kann und dabei eine hohe Effizienz und hohe Lichtausbeute hat.

Die erste konfokale Apertur umfasst eine Mehrzahl von punktförmigen Öffnungen oder mindestens eine schlitzförmige Öffnung. Insbesondere sind die punktförmigen Öffnungen in einer Reihe angeordnet, vorzugsweise in regelmäßigen Abständen. Im Falle von punktförmigen Öffnungen handelt es sich um einen sogenannten Multipunkt-Sensor, welcher eingerichtet ist, eine Reihe von Punkten auf dem Messobjekt zu vermessen. In diesem Fall kann die erste konfokale Apertur auch als Enden einer Reihe von Fasern ausgeführt sein, wobei jedes Faserende einer punktförmigen Öffnung entspricht. Umfasst die erste konfokale Apertur eine schlitzförmige Öffnung, so handelt es sich um einen sogenannten chromatischen Liniensensor, welcher eingerichtet ist, um einen linienförmigen Bereich auf dem Messobjekt zu beleuchten und zu vermessen. Die Dichte der Messstellen in dem linienförmigen Bereich hängt dabei mit der Empfangs- und Auswerteeinheit und deren transversaler Auflösung zusammen.

Die erste Empfangs- und Auswerteeinheit umfasst bevorzugt ein Spektrometer, welches die Intensitäten von empfangenem Licht in Abhängigkeit der Wellenlänge erfasst.

Nach einer bevorzugten Ausführungsform der Erfindung umfasst die Lichtquelle mindestens eine Pumpquelle, welche Pumplicht emittiert und auf einen Luminophor richtet, der das Pumplicht in polychromatisches Licht umwandelt. Das Pumplicht ist im Regelfall nahezu monochromatisch. Als Pumpquellen werden bevorzugt Laserdioden eingesetzt, aufgrund der hohen erreichbaren Intensität.

Das Pumplicht kann auch von einer Mehrzahl von Luminophoren in polychromatisches Licht umgewandelt werden, die voneinander getrennt angeordnet sind.

Bei einigen Ausführungsbeispielen tritt das polychromatische Licht anschließend durch einen Homogenisator, derart, dass die Intensität des von der Austrittsfläche austretenden Lichts zumindest nahezu gleichmäßig verteilt ist. Vorzugsweise ist der Homogenisator als eine dünne Platte, bevorzugt aus Glas, ausgeführt, durch welche das Licht im Wesentlichen in eine erste Raumrichtung propagiert, während die Platte in einer zweiten Raumrichtung als Lichtwellenleiter fungiert, und das Licht sich in der dritten Raumrichtung ausbreiten und damit gleichmäßig verteilen kann. Dies hat den Zweck einer gleichmäßigen Ausleuchtung über das Messvolumen. Die Luminophore können hier näherungsweise punktförmig sein, bzw. ein kleines Volumen aufweisen.

Der Homogenisator kann beispielsweise einen Abschnitt haben, der die Form eines vorzugsweise quadratischen Pyramidenstumpfes hat, der so angeordnet ist, dass das polychromatische Licht über die Deckfläche des Pyramidenstumpfes in den Abschnitt eintritt. Es hat sich überraschenderweise gezeigt, dass die pyramidale Form zu einer besonders gleichmäßigen Intensitätsverteilung an der Grundfläche des Pyramidenstumpfes führt. Bei rotationssymmetrischen Homogenisatoren beobachtet man in der Regel eine unerwünschte Konzentration des polychromatischen Lichts auf der Symmetrieachse.

Ein pyramidaler Homogenisator ist ferner vorteilhaft, wenn eine noch zu erläuternde Umformungseinrichtung eingesetzt wird, die den Querschnitt der Lichtverteilung länglicher macht und in die das polychromatische Licht eingekoppelt werden muss. Enthält die Umformungseinrichtung beispielsweise Lichtleitfasern, so kann das polychromatische Licht nur unter kleinen Winkeln in die Fasern eintreten. Die Form des Pyramidenstumpfes minimiert den Anteil des Lichts, der unter einem zu steilen Winkel auf die Fasern trifft.

Seitenflächen des Pyramidenstumpfes können dabei so geneigt sein, dass in dem Abschnitt geführtes polychromatisches Licht durch Totalreflexion in dem Homogenisator geführt wird. Dadurch entfällt der Aufwand für eine Verspiegelung der Seitenflächen.

Ein Homogenisator beschriebener Art kann auch mit allen nachfolgenden Ausführungsformen kombiniert werden.

Nach einer bevorzugten Ausführungsform der Erfindung ist der Luminophor stabförmig. Durch eine Seitenfläche des stabförmigen Luminophors austretendes Licht wird vorteilhafterweise als Messlicht verwendet. Die Seitenfläche ist dabei eine Fläche, welche sich über die Länge des Stabes ausdehnt. Dies hat den Vorteil, dass nur eine Pumpquelle und nur ein Luminophor benötigt werden, um über einen länglichen Bereich Licht abzugeben, wobei das Licht aus einem kontinuierlichen Bereich abgegeben wird anstatt von mehreren Punktquellen.

Der stabförmige Luminophor kann dabei eine Grundfläche (und Querschnitt) beliebiger Form, bspw. kreisförmig oder Polygon, haben. Die Grundfläche ist die Fläche an einem Ende des Stabes. Es handelt sich bei der geometrischen Form also bevorzugt um einen Zylinder oder ein Prisma, dessen Höhe deutlich größer ist als der Durchmesser der Grundfläche.

Vorzugsweise tritt das Licht dabei durch eine der Grundflächen des stabförmigen Luminophors ein. Eine weitere vorteilhafte Möglichkeit ist es, von beiden Grundflächen des stabförmigen Luminophors aus zu pumpen, was die Lichtausbeute verbessert und die Abstrahlung zumindest teilweise über die Stablänge gleichmäßiger macht.

Alternativ tritt Pumplicht durch eine Seitenfläche des Luminophors ein. In diesem Fall werden entweder mehrere Pumpquellen über die Länge des stabförmigen Luminophors eingesetzt, oder aber Pumplicht einer einzelnen Pumpquelle wird, beispielsweise mittels eine Fokussieroptik mit einer Zylinderlinse, auf einen Linienabschnitt am Ort des Luminophors fokussiert.

Vorteilhafterweise ist der stabförmige Luminophor so ausgeführt, dass er als Lichtwellenleiter für das Pumplicht und/oder das Messlicht wirkt. Dies wird vor allem durch die Wahl der Oberflächenbeschaffenheit (glatte Oberfläche) und einen geringen Durchmesser (typischerweise ca. 5µm oder ca. 50µm, je nach gewünschtem Lichtwellenleitertyp) erreicht.

LED-Luminophore haben üblicherweise mittlere Weglängen im Bereich 0,2mm bis 0,5mm für die Absorption und frequenzverschobene Lichtemission. Im Falle annähernd punktförmiger Lichtquellen muss das Pumplicht durch vielfache Lichtstreuung an Korngrenzen in einem kleinen Leuchtbereich unter 100µm festgehalten werden, um einen Leuchtfleck zu erhalten, der für die punktförmige Abstandsmessung klein genug ist. Mit dem stabförmigen Luminophor kann das Pumplicht linear und streuungsfrei geführt werden wie in einer Single- oder Multimodefaser (Lichtwellenleiter).

Nach einer besonders bevorzugten Ausführungsform der Erfindung umfasst die Lichtquelle eine Schlitzblende, wobei der Schlitz der Schlitzblende die Lichtaustrittsfläche der Lichtquelle ist. Der Schlitz kann gleichzeitig als erste konfokale Apertur der Messvorrichtung dienen. Durch die Blende wird Licht, welches nicht durch die Austrittsfläche gerichtet ist, vorteilhaft abgeschirmt, um die Messung nicht zu beeinflussen.

Nach einer besonders bevorzugten Ausführungsform der Erfindung ist die Schlitzblende relativ zur Längsachse des stabförmigen Luminophors verkippt. Dies hat den Vorteil, dass eine ungleichmäßige Abgabe von Licht über die Länge des Luminophors zumindest teilweise ausgeglichen werden kann, da durch den Teil der Schlitzblende, welcher näher am Luminophor ist, prozentual mehr Licht tritt als durch den weiter entfernten Teil. Daher ist vorteilhafterweise die Schlitzblende so verkippt, dass diese näher an einem Bereich des Luminophors ist, welcher weniger Licht abgibt und weiter entfernt von einem Bereich des Luminophors, welcher mehr Licht abgibt.

Nach einer besonders bevorzugten Ausführungsform der Erfindung ist die einer Eintrittsfläche, durch welche das Pumplicht in den Luminophor eintritt, gegenüberliegende Stirnfläche des stabförmigen Luminophors verspiegelt ausgeführt. Dies hat den Effekt, dass Pumplicht, welches den Luminophor vollständig durchtritt, am Ende reflektiert wird und nochmals den Luminophor durchtritt. Dies bewirkt eine höhere Ausbeute und eine gleichmäßigere Abstrahlung.

Nach einer besonders bevorzugten Ausführungsform der Erfindung ist der Luminophor konisch ausgeführt, insbesondere als Kegelstumpf oder Kegel. Dies bewirkt eine gleichmäßigere Lichtausbeute. Bevorzugt ist die Eintrittsfläche hier die größere Grundfläche des Kegelstumpfes bzw. durch die Grundfläche des Kegels. Vorteilhafterweise ist der konische Luminophor dabei so ausgeführt, dass er als Lichtwellenleiter für das Pumplicht wirkt. Hierdurch wird das Pumplicht im schmaleren Teil des Kegels/Kegelstumpfs konzentriert, was zu einer höheren Ausbeute pro Volumeneinheit führt.

Nach einer besonders bevorzugten Ausführungsform der Erfindung umfasst die Lichtquelle einen Parabolspiegel. Dieser fokussiert Licht, welches den Luminophor nicht in Richtung der Austrittsfläche der Lichtquelle verlässt, zumindest teilweise in Richtung der Austrittsfläche und erlaubt damit eine höhere Ausbeute.

Nach einer besonders bevorzugten Ausführungsform der Erfindung ist ein Teil der Außenflächen (ein Teil der Seitenfläche/Seitenflächen und/oder mindestens eine Grundfläche) des stabförmigen Luminophors verspiegelt, wobei die gewünschte Austrittsfläche unverspiegelt ist. Dies bewirkt eine höhere Lichtausbeute, da Strahlung, welche nicht in Richtung der Lichtaustrittsfläche emittiert wird, zumindest teilweise in Richtung der Lichtaustrittsfläche gespiegelt wird.

Vorteilhafterweise besteht der Luminophor aus einer Mischung von verschiedenen luminophoren Substanzen, welche Licht verschiedener Wellenlängen emittieren. Dies führt zu einem breiteren polychromatischen Spektrum. Es besteht mitunter ein Effekt sekundärer Lumineszenz, wenn Licht einer ersten Emissionswellenlänge eine andere luminophore Substanz anregt, welche Licht einer größeren Emissionswellenlänge emittiert.

Bevorzugt wird ein homogenes Gemisch der verschiedenen luminophoren Substanzen verwendet.

Bevorzugt wird das Mischverhältnis der verschiedenen luminophoren Substanzen über die Länge und/oder über den Radius des stabförmigen Luminophors verändert. Hierdurch können Effekte der sekundären Emission ausgenutzt oder ausgeglichen werden. Es ist auch ein Schichtaufbau mit reinen Schichten unterschiedlicher Substanzen möglich.

Vorteilhafterweise besteht der Luminophor entweder aus einem Einkristall oder aus gepresstem Pulver.

Nach einer bevorzugten Ausführungsform der Erfindung umfasst die Messvorrichtung eine zweite Empfangs- und Auswerteeinheit, welche ausgebildet ist, um eine Abbildung des Messobjekts zu erfassen. Diese ist insbesondere als sogenannte chromatische Kamera ausgeführt, welche die verschiedenen Fokuslagen der verschiedenen Wellenlängen auf dem Objekt ausnutzt, um ein Bild mit einer verbesserten Tiefenschärfe zu erzeugen.

Nach einer bevorzugten Ausführungsform der Erfindung umfasst die Messvorrichtung eine zweite Abbildungsoptik, welche räumlich getrennt von der ersten Abbildungsoptik ausgeführt ist, wobei die erste Abbildungsoptik und die zweite Abbildungsoptik je ein zusätzliches optische Element umfassen, welches eine chromatische Fokusverschiebung quer zur optischen Achse der jeweiligen Abbildungsoptik (oder genauer gesagt einer Linse der jeweiligen Abbildungsoptik) verursacht.

Die erste Abbildungsoptik kann dazu eingerichtet sein, Fokuspunkte unterschiedlicher Wellenlängen an unterschiedlichen Orten zu bilden, wobei die Orte entlang eines Liniensegments liegen, das einen spitzen Winkel zur optischen Achse einer Linse der ersten Abbildungsoptik bildet.

Nach einer bevorzugten Ausführungsform der Erfindung umfasst die Lichtquelle mindestens eine Pumpquelle, welche Pumplicht emittiert, wobei das Pumplicht von einem plattenförmigen Luminophor in polychromatisches Licht umgewandelt wird.

Unter einem plattenförmigen Luminophor versteht man dabei ein Luminophor, das in zwei Richtungen ausgedehnt ist, in der dritten Richtung hingegen nur eine geringe Ausdehnung aufweist. Durch eine Seitenfläche des plattenförmigen Luminophors austretendes Licht wird vorteilhafterweise als Messlicht verwendet. Die Seitenfläche ist dabei eine Fläche, die senkrecht zur Grundfläche steht (wobei die Grundfläche in zwei Dimensionen ausgedehnt ist).

Der Luminophor ist aus transparentem Material mit homogenem Brechungsindex gefertigt, so dass Pumplicht und Fluoreszenzlicht geradlinig und ohne Streuung mehrere Millimeter transportiert werden. Geeignet sind Einkristalle, die mit Ionen aus der Gruppe der seltenen Erden dotiert sind, z.B. Ce:YAG. Aber auch mit Photolumineszenz-Zentren dotierte transparente Keramiken oder Gläser sind einsetzbar.

Geeignet sind auch Einkristalle von Crytur. Diese haben einen hohen Brechungsindex (1,82 bei 532 nm), sind aber hart und schwierig zu bearbeiten. Die typische Plattendicke beträgt 200 µm. Aus Gründen der besseren Herstellbarkeit kann es zweckmäßig sein, eine Deckplatte aus einem solchen Einkristall zu verwenden, die auf eine Trägerplatte gebondet und dünn geschliffen wird.

Die Verwendung eines plattenförmigen Luminophors hat dabei den Vorteil, dass sich für das aus der Seitenfläche austretende Licht auf einfache Weise eine weitgehend homogene Lichtverteilung erreichen lässt

Vorzugsweise tritt das Licht der Pumpquelle durch eine Seitenfläche des plattenförmigen Luminophors ein. Besonders bevorzugt tritt das Licht durch diejenige Seitenfläche ein, die der Seitenfläche gegenüberliegt, durch die das Messlicht austritt.

Das typischerweise blaue (z.B. 450 nm) oder violette (z.B. 405 nm) Pumplicht wird in den Photolumineszenz-Zentren absorbiert und mit verschobener Wellenlänge isotrop (d.h. nach allen Richtungen gleichmäßig) re-emittiert. Weil das erzeugte polychromatische Licht kaum gestreut oder absorbiert wird (es sei denn, es eignet sich selbst zur Anregung von Fluoreszenz), lässt sich seine Intensität akkumulieren.

Für jeden Punkt auf der Seitenfläche des Luminophors, durch die das Fluoreszenzlicht aus dem Luminophor austritt, lässt sich ein Fangbereich im plattenförmigen Luminophor definieren, d.h. ein kegelförmiges Volumen mit einem bestimmten Öffnungswinkel, das seine Spitze in der punktförmigen Öffnung hat.

Alles Licht, das im Fangbereich der punktförmigen Öffnung entsteht und zu dem Punkt auf der Seitenfläche läuft, kann als Messlicht verwendet werden. Auf dem Weg dorthin nimmt der Intensitätsanteil des einkoppelbaren Lichts fortlaufend zu (Akkumulation).

Falls das Messlicht in eine Lichtleitfaser eingekoppelt wird, die sich hinter der Seitenfläche befindet, ist der Öffnungswinkel des Kegels durch den maximalen Akzeptanzwinkel der Faser gegeben. Falls das Messlicht nach dem Austritt aus dem Luminophor nicht über Lichtleitfaser, sondern über eine Freistrahloptik transportiert wird, ist der Öffnungswinkel durch die Apertur der Optik gegeben.

Das polychromatische Licht, das durch die Grundflächen und die nicht als Lichtaustrittsfläche genutzten Seitenflächen des Luminophors tritt, kann nicht als Messlicht verwendet werden. In einer bevorzugten Ausführungsform sind deshalb die Grundflächen und die nicht als Lichtaustrittsfläche genutzten Seitenflächen verspiegelt ausgeführt.

Des Weiteren kann polychromatisches Licht, das unter zu großen Winkeln auf die Seitenfläche trifft, durch die das Messlicht austritt, nicht als Messlicht verwendet werden, da der Entstehungsort außerhalb des Fangbereichs der punktförmigen Aperturen liegt.

In einer bevorzugten Ausführungsform ist deshalb der plattenförmige Luminophor mit einem Keilwinkel zwischen den beiden Grundflächen versehen, wobei der Keil zwischen den beiden Grundflächen so ausgeführt ist, dass der Abstand zwischen den Grundflächen am Ort der Seitenfläche, durch die das Messlicht austritt, größer ist als der Abstand am Ort derjenigen Seitenfläche, durch die das Pumplicht eintritt. Der Keilwinkel entlang der Seitenfläche, an der das Pumplicht eindringt, liegt vorzugsweise zwischen 1° und 10°.

Die Keilförmigkeit des plattenförmigen Luminophors, gegebenenfalls auch mit verspiegelten Grundflächen bewirkt, dass das Fluoreszenzlicht nach mehreren Reflexionen unter immer flacherem Winkel in Richtung der Lichtaustrittsfläche geleitet wird. Auf diese Weise wird ein größerer Anteil des Fluoreszenzlichts nutzbar gemacht.

Nach einer weiteren bevorzugten Ausführungsform wird aus mehreren Seitenflächen austretendes Licht aus Messlicht verwendet. Beispielweise lassen sich zwei Faserarrays an zwei Seitenflächen des plattenförmigen Luminophors anbringen. Die dem Luminophor abgewandten Faserenden der einzelnen Fasern der beiden Faserarrays können so angeordnet werden, dass sie eine Linie von punktförmigen Öffnungen und somit eine längliche Lichtaustrittsfläche bilden. Die Lichtleitfasern bilden somit eine Umformungseinrichtung, die dazu eingerichtet ist, eine von dem Luminophor erzeugte Lichtverteilung so umzuformen, dass der Querschnitt der Lichtverteilung länglicher wird.

Bei Verwendung plattenförmiger Luminophoren kann die Umformungseinrichtung eine Vielzahl von Fasern aufweisen, wobei die Fasern jeweils ein erstes Faserende aufweisen, und wobei die ersten Faserenden polychromatisches Licht empfangen, das aus einer oder mehreren Seitenflächen des plattenförmigen Luminophors austritt, sowie jeweils ein zweites Faserende, wobei die zweiten Fasereden in einer Linie angeordnet sind und die Lichtaustrittsfläche bilden. Die zweiten Faserenden können dabei gleichzeitig als konfokale Apertur dienen.

In einer alternativen Ausführungsform tritt das Licht der Pumpquelle durch eine Grundfläche des plattenförmigen Luminophors ein. Dies hat den Vorteil, dass für die Einkopplung des Pumplichts in den Luminophor eine größere Fläche zur Verfügung steht als bei der Einkopplung über eine Seitenfläche.

Dadurch lässt sich auch mit Pumplichtquellen, die eine vergleichsweise geringe Leuchtdichte aufweisen, eine hinreichend große akkumulierte Pumplicht-Leistung erreichen, wenn ein großer Teil der Grundfläche bestrahlt wird. Insbesondere lassen sich LED-Arrays als Pumplichtquelle einsetzen, die eine kostengünstige Alternative beispielsweise zu Laser-Dioden darstellen.

LEDs strahlen das Licht auf einer Fläche ab. Sie sind einfacher herstellbar und haben einen höheren elektrisch-optischen Wirkungsgrad als Laser-Dioden. Wegen der flächigen Abstrahlung sind sie auch einfacher zu kühlen als Laser-Dioden. Andererseits ist ihre Leuchtdichte viel geringer als die von Laser-Dioden. Erst die Transparenz des Luminophors und der Akkumulationseffekt ermöglichen es, die Leuchtdichte aller Volumenabschnitte zu ackumulieren und auf einen für die Messtechnik hinreichenden Wert zu bringen.

In einer bevorzugten Ausführungsform ist dabei diejenige Grundfläche, die der Lichteintrittsfläche des Pumplichts gegenüberliegt, verspiegelt ausgeführt. Dies hat den Vorteil, dass Pumplicht, das auf diese Grundfläche trifft, den Luminophor nicht verlässt, sondern auf dem Rückweg nach der Reflexion zur Erzeugung von Messlicht beitragen kann.

Es ist vorteilhaft, den plattenförmigen Luminophor dünn, beispielsweise mit einer Dicke von 50-200 µm, auszuführen, so dass die Dicke vergleichbar mit dem typischen Durchmesser von Multimode-Fasern ist. Dadurch kann ein großer Teil des Lichts, das auf die als Lichtaustrittsfläche genutzte Seitenfläche trifft, als Messlicht verwendet werden.

Da die typische Weglänge des Pumplichts im Lumiphor allerdings einige 100 µm beträgt, kann dabei ein großer Teil des Pumplichts trotz Verspiegelung nicht zur Erzeugung von Fluoreszenzlicht beitragen.

In einer vorteilhaften Ausführungsform wird deshalb diejenige Grundfläche, die der Lichteintrittsfläche des Pumplichts gegenüberliegt, mit einer flächendeckenden Textur von Pyramiden versehen. Durch diese Textur wird verhindert, dass Pumplicht senkrecht und auf kürzestem Wege die Platte durchquert. Die Pyramidentextur muss nicht im Phosphormaterial eingearbeitet sein; es genügt eine texturierte Deckschicht.

Nach einer bevorzugten Ausführungsform umfasst die Lichtquelle eine Schlitzblende, wobei der Schlitz der Schlitzblende die Lichtaustrittsfläche der Lichtquelle ist. Der Schlitz kann gleichzeitig als erste konfokale Apertur der Messvorrichtung dienen.

Die Verwendung einer Umformungseinrichtung, die dazu eingerichtet ist, eine von dem Luminophor erzeugte Lichtverteilung so umzuformen, dass der Querschnitt der Lichtverteilung länglicher wird, hat allgemein den Vorteil, dass sich die Lichtausbeute optimieren lässt. Beim einem stabförmigen und einem plattenförmigen Luminophor lässt sich beispielsweise nur derjenige Teil des Fluoreszenzlichts als Messlicht verwenden, der unterhalb eines bestimmten Grenzwinkels auf die Lichtaustrittsfläche trifft (bei der Verwendung eines Faser-Arrays ist der Grenzwinkel beispielsweise durch den maximalen Akzeptanzwinkel der Fasern gegeben).

Des Weiteren muss die Geometrie des stabförmigen oder plattenförmigen Luminophors an die Geometrie der konfokalen Apertur der Messvorrichtung angepasst werden, um eine möglichst homogene Ausleuchtung der konfokalen Apertur zu ermöglichen.

Diese beiden Beschränkungen lassen sich umgehen, indem man eine Umformungseinrichtung verwendet, die eine flächenhafte Lichtverteilung des vom Luminophor erzeugten Fluoreszenzlichts empfängt und in eine längliche Lichtaustrittsfläche überführt.

In einer bevorzugten Ausführungsform wird als Umformungseinrichtung eine flächenhafte Anordnung von optischen Teil-Elementen verwendet. Bei den Teil-Elementen kann es sich dabei insbesondere um Lichtleitfasern oder Mikrolinsen handeln.

Die Anordnung von Lichtleitfasern kann so ausgeführt sein, dass die jeweils ersten Faserenden jeder Lichtleitfaser auf einer Fläche angeordnet sind und von einem Luminophor ausgesandtes polychromatisches Licht empfangen und die jeweils zweiten Faserenden jeder Lichtleitfaser auf einer Linie angeordnet sind und das polychromatische Licht aussenden. In diesem Fall bildet die Anordnung der zweiten Faserenden die längliche Lichtaustrittsfläche der Lichtquelle.

Die Anordnung von Mikrolinsen kann so ausgeführt sein, dass die Mikrolinsen auf einer Fläche sind und das polychromatische Licht in Teilbündel aufspalten, wobei jedes Teilbündel über weitere optische Elemente, beispielsweise Umlenkspiegel weitergeleitet wird, und wobei die einzelnen Lichtbündel zu einer länglichen Lichtfläche zusammengeführt werden.

Die flächenhafte Anordnung der optischen Teil-Elemente lässt sich insbesondere so optimieren, dass ein möglichst großer Anteil des vom Luminophor erzeugten polychromatischen Lichts aufgenommen und als Messlicht verwendet werden kann.

In einer bevorzugten Ausführung wird das vom Luminophor erzeugte Licht kollimiert, und die flächenhafte Anordnung von Teil-Elementen ist auf einer Kreisoberfläche innerhalb des kollimierten Strahls angebracht. In einer alternativen Ausführung strahlt der Luminophor Licht in alle Raumrichtungen ab, und die flächenhafte Anordnung von Teil-Elementen ist auf einer Kugeloberfläche bzw. auf einem Teil einer Kugeloberfläche um dem Luminphor angeordnet.

Ein Vorteil einer Lichtquelle unter Verwendung einer Umformungseinrichtung, die eine flächenhafte Verteilung von polychromatischem Licht empfängt und in eine längliche Lichtverteilung überführt, liegt darin, dass die Geometrie des Luminophors nicht an die Geometrie der (länglichen) konfokalen Apertur angepasst werden muss, sondern so ausgestaltet werden kann, dass sich eine möglichst hohe Lichtausbeute ergibt.

In einer bevorzugten Ausführung hat der Luminophor einen kegelstumpfförmigen Abschnitt, in dessen Deckfläche das Pumplicht eingekoppelt wird, das im Luminophor polychromatisches Licht erzeugt. Die Mantelfläche des Luminophors ist dabei verspiegelt ausgeführt, so dass das polychromatische Licht den Luminophor nicht über die Mantelfläche verlassen kann, sondern an der Mantelfläche reflektiert wird.

Ein Teil des polychromatischen Lichts, das im Luminophor erzeugt wird, trifft auf die Mantelfläche des Kegelstumpfs. Wenn die Projektion eines Lichtstrahls dabei auf die Symmetrieachse des Kegelstumpfs in Richtung der Grundfläche zeigt, verringert sich nach der Reflexion der Winkel zwischen dem Lichtstrahl und der Symmetrieachse.

Das polychromatische Licht tritt schließlich unter geringen Winkeln zur Symmetrieachse des Kegelstumpfs durch die Grundfläche des Kegelstumpfs und bildet eine kreisförmige flächenhafte Lichtverteilung.

Das Licht wird von einer Umformungseinrichtung, beispielsweise einer flächenhaften Anordnung von Faserenden, aufgenommen und in eine längliche Lichtverteilung überführt.

In einer weiteren bevorzugten Ausführung weist der Luminophor einen zylindrischen Abschnitt auf, in dessen Mantelfläche sich ein Eintrittsfenster für das Pumplicht befindet. Das Pumplicht wird durch das Eintrittsfenster derart in den zylinderförmigen Luminophor eingestrahlt, dass das Pumplicht unter einem flachen Winkel auf die Innenseite des Zylindermantels trifft und Totalreflexion erfährt.

Der zylinderförmige Luminophor ist so ausgestaltet, dass das Pumplicht auf eine Spiralbahn innerhalb des Luminophors gedrängt wird. Der Luminophor wirkt somit als "Falle" für das Pumplicht, so dass das Pumplicht vollständig zur Erzeugung von polychromatischem Licht beiträgt.

Das polychromatische Licht verlässt den Luminophor durch die Mantelfläche und die Grundflächen und wird dementsprechend in alle Raumrichtungen abgestrahlt.

Um das polychromatische Licht aufzufangen und weiterzuleiten, kann eine flächenhafte Anordnung von Fasern verwendet werden, die auf einer Fläche um den Luminophor herum angeordnet sind. Insbesondere kann eine Anordnung von Fasern verwendet werden, die auf einer Kugeloberfläche oder einem Teil einer Kugeloberfläche angeordnet sind, die den Luminophor umschließt.

In einer alternativen Ausführungsform hat der Luminophor einen kegelstumpfförmigen Abschnitt, wobei sich das Eintrittfenster in der Nähe der Grundfläche befindet und sich das Pumplicht im Luminophor auf einer Spiralbahn in Richtung der Deckfläche bewegt. Durch die Neigung der Mantelfläche wird dabei die Ganghöhe der Spiralbahn sukzessive vermindert, bis das Pumplicht schließlich auf einer Spiralbahn zurück in Richtung der Grundfläche läuft.

Diese Ausführung hat den Vorteil, dass sich der Luminophor durch die größere Laufstrecke des Pumplichts bei gleicher Ausbeute kompakter gestalten lässt.

Die Kompaktheit lässt sich weiter erhöhen, wenn der Luminophor so gestaltet ist, dass er aus zwei Kegelstümpfen besteht, die an der Grundfläche verbunden sind, wobei sich das Eintrittsfenster in der Nähe eines der Grundflächen befindet. Das Licht, das auf einer Spiralbahn zunächst in Richtung der Deckfläche eines der Kegelstümpfe und dann zurück zur Grundfläche läuft, wird nach Durchtreten der Grundfläche im zweiten Kegelstumpf auf einer Spiralbahn zur zweiten Deckfläche und zurück zur Grundfläche geführt.

Bei einem anderen Ausführungsbeispiel hat der Luminophor einen Abschnitt, der die Form eines vorzugsweise quadratischen Pyramidenstumpfes hat. Der Abschnitt ist so relativ zu der Pumpquelle angeordnet, dass das Pumplicht über die Deckfläche des Pyramidenstumpfes in den Luminophor eintritt. Ein Teil des polychromatischen Lichts, das im Luminophor erzeugt wird, trifft auf die Mantelfläche des Pyramidenstumpfs. Wenn die Projektion eines Lichtstrahls dabei auf die Symmetrieachse des Kegelstumpfs in Richtung der Grundfläche zeigt, verringert sich nach der Reflexion der Winkel zwischen dem Lichtstrahl und der Symmetrieachse. Das polychromatische Licht tritt schließlich unter kleinen Winkeln zur Symmetrieachse des Pyramidenstumpfs durch dessen Grundfläche und kann dadurch leichter von einer nachfolgenden Umformungseinrichtung aufgenommen werden, welche die vom Pyramidenstumpf erzeugte polygonale Lichtverteilung in eine linienhafte Lichtverteilung umwandelt.

Ein so geformter Luminophor lässt sich einfacher und kostengünstiger herstellen als kegelstumpfförmige Luminophore und erzeugt eine homogenere Intensitätsverteilung.

Damit weder das Pumplicht noch das im Luminophor erzeugte polychromatische Licht den Pyramidenstumpf über dessen Seitenflächen verlassen, sollten diese verspiegelt sein.

Benachbart zu der Grundfläche des Pyramidenstumpfes kann ein Homogenisator angeordnet sein, der das polychromatische Licht weiter homogenisiert, aber die Winkelverteilung nicht mehr ändern muss. Der Homogenisator kann beispielsweise quaderförmig und an den Querschnitt des Luminophors angepasst sein.

Die Umformungseinrichtung kann beispielsweise eine Vielzahl optischer Fasern umfasst, wobei erste Enden der optischen Fasern über eine Fläche verteilt und zweite Enden der optischen Fasern entlang einer Linie verteilt angeordnet sind. Die ersten Enden weisen dabei zum Luminophor oder zum Homogenisator, falls ein solcher vorgesehen ist.

Nachstehend werden Ausführungsbeispiele der Erfindung anhand von Figuren näher erläutert. Gleiche Bezugszeichen bezeichnen dabei gleiche oder entsprechende Elemente. Es zeigen:

### KURZE BESCHREIBUNG DER ZEICHNUNGEN

- Fig. 1: eine schematische Darstellung einer chromatisch-konfokalen Messeinrichtung;
- Fig. 2: eine erste vorteilhafte Ausgestaltung der Lichtquelle, bei der mehrere Luminophoren Licht in einen Homogenisator einkoppeln;
- Fig. 3: eine zweite vorteilhafte Ausgestaltung der Lichtquelle, bei welcher der Luminophor stabförmig ist;
- Fig. 4: eine dritte vorteilhafte Ausgestaltung der Lichtquelle, bei welcher ein stabförmiger Luminophor eine Schlitzblende beleuchtet;
- Fig. 5: eine vierte vorteilhafte Ausgestaltung der Lichtquelle, bei welcher die Schlitzblende geneigt zur Längsachse des Luminophors angeordnet ist;
- Fig. 6: eine fünfte vorteilhafte Ausgestaltung der Lichtquelle, bei welcher der stabförmige Luminophor eine verspiegelte Stirnfläche hat;
- Fig. 7: eine sechste vorteilhafte Ausgestaltung der Lichtquelle, bei welcher der Luminophor kegelstumpfförmig ist;
- Fig. 8: eine siebte vorteilhafte Ausgestaltung der Lichtquelle, bei welcher ein stabförmiger Luminophor von einer parabolischen Rinne zum Zwecke der Lichtsammlung umgeben ist;
- Fig. 9: eine schematische Darstellung einer alternativen chromatisch-konfokalen Messein-richtung, die zusätzlich eine Kamera aufweist;
- Fig. 10a und 10b: schematische Darstellungen einer weiteren alternativen chromatisch-konfokalen Messeinrichtung in einer stark vereinfachten und einer detaillierteren Version, bei der Prismen eine transversale chromatische Fokusverschiebung erzeu-gen;
- Fig. 11: eine achte vorteilhafte Ausgestaltung der Lichtquelle, bei der das vom Luminophor erzeugte Messlicht durch eine Zylinderlinse auf eine längliche Austrittsfläche fokus-siert wird;
- Fig. 12: eine weitere neunte vorteilhafte Ausgestaltung der Lichtquelle, bei der das Pump-licht durch eine Zylinderlinse auf einen stabförmigen Luminophor fokussiert wird;
- Fig. 13: eine zehnte vorteilhafte Ausgestaltung der Lichtquelle, bei der ein in einer Richtung keilförmiger Homogenisator eingesetzt wird;
- Fig. 14: eine elfte vorteilhafte Ausgestaltung der Lichtquelle, bei welcher der Luminophor plattenförmig ist und das Pumpplicht über eine Seitenfläche eingestrahlt wird;
- Fig. 15: eine zwölfte vorteilhafte Ausgestaltung der Lichtquelle, bei welcher Lichtleitfasern das von einem plattenförmigen Luminophor erzeugte Messlicht aufnehmen und in eine linienförmige Lichtverteilung umformen;
- Fig. 16: eine dreizehnte vorteilhafte Ausgestaltung der Lichtquelle, bei der der Luminophor plattenförmig ist und das Pumpplicht über eine der beiden Grundflächen einge-strahlt wird;
- Fig. 17: eine vierzehnte vorteilhafte Ausgestaltung der Lichtquelle, bei welcher der Lumino-phor kegelstumpfförmig ist und das Licht durch Totalreflexion im Inneren des Lu-minophors geführt wird;
- Fig. 18: eine fünfzehnte vorteilhafte Ausgestaltung der Lichtquelle, bei welcher der Lumino-phor stabförmig ist und das Pumplicht über die gekrümmte Zylinderfläche in den Luminophor eingekoppelt wird;
- Fig. 19: eine sechszehnte vorteilhafte Ausgestaltung der Lichtquelle, bei welcher der Lumi-nophor die Form eines Doppelkegelstumpfes hat;
- Fig. 20: eine siebzehnte vorteilhafte Ausgestaltung der Lichtquelle, bei welcher der Lumino-phor die Form eines quadratischen Pyramidenstumpfes hat;
- Fig. 21: eine achtzehnte vorteilhafte Ausgestaltung der Lichtquelle, bei welcher der Lumi-nophor stabförmig ist und das daraus austretende polychromatische Licht durch einen Homogenisator geleitet wird, der die Form eines quadratischen Pyramiden-stumpfes hat.

### BERSCHREIBUNG BEVORZUGTER AUSFÜHRUNGSBEISPIELE

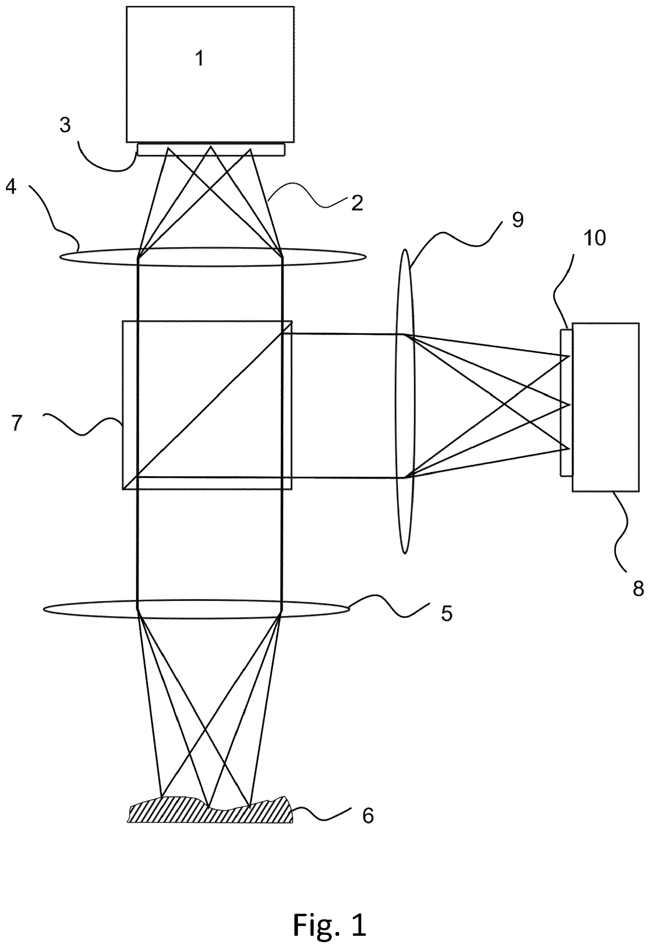

Fig. 1 zeigt eine schematische Darstellung einer chromatisch-konfokalen Messeinrichtung. Diese umfasst eine Lichtquelle 1, welche durch eine Lichtaustrittsfläche polychromatisches Messlicht 2 emittiert. Das Messlicht 2 tritt durch eine erste konfokale Blende 3, welche eine Mehrzahl von punktförmigen Öffnungen oder mindestens eine schlitzförmige Öffnung umfasst und als konfokale Apertur wirkt. Die erste konfokale Blende 3 wird durch eine Abbildungsoptik, welche hier die Linsen 4 und 5 umfasst, auf ein Messobjekt 6 abgebildet. Dabei verursacht zumindest ein Bestandteil der Abbildungsoptik, hier beispielsgemäß die Linse 5, eine chromatische Fokusverschiebung, welche dazu führt, dass Licht unterschiedlicher Wellenlängen in unterschiedlichen Höhen entlang der optischen Achse der Abbildungsoptik abgebildet wird.

Messlicht 2 wird vom Messobjekt reflektiert und tritt durch die Linse 5 zurück in die Abbildungsoptik. Diese umfasst beispielsgemäß einen Strahlteiler 7, welcher einen Teil des reflektierten Messlichts 2 in Richtung einer ersten Empfangs- und Auswerteeinheit 8 lenkt. Dabei wird das Messlicht 2 durch eine weitere Linse 9 auf eine zweite konfokale Blende 10 abgebildet. Nach dem chromatisch-konfokalen Prinzip wird nur Licht derjenigen Wellenlängen scharf auf die zweite konfokale Blende 10 abgebildet, die auch auf der Oberfläche des Messobjekts 6 fokussiert waren. Licht dieser Wellenlängen tritt mit maximaler Intensität durch die zweite konfokale Blende 10.

Die erste Empfangs- und Auswerteeinheit 8 misst die Intensität des vom Messobjekt reflektierten und durch die zweite konfokale Blende 10 getretenen Messlichts in Abhängigkeit der Wellenlänge und der transversalen Position der Reflexionsstelle auf dem Messobjekt und bestimmt daraus Abstände und/oder Dicken von mehreren Stellen oder eines in mindestens eine Raumrichtung ausgedehnten Bereichs des Messobjekts 6.

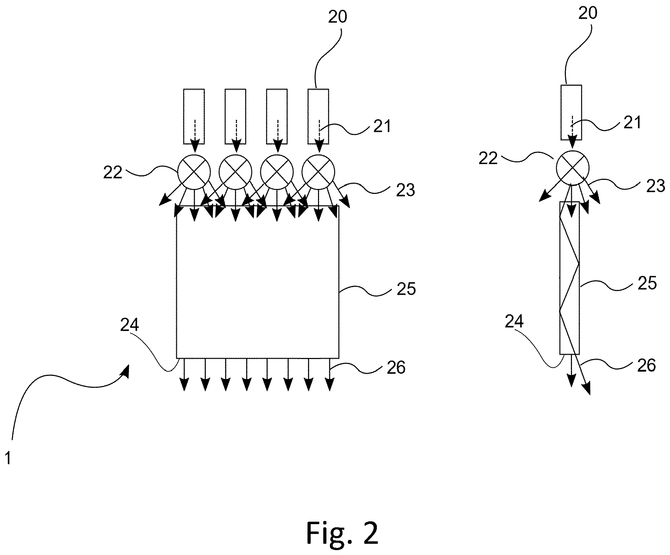

Die Figuren 2 bis 8, 11 und 12 zeigen vorteilhafte Ausgestaltungen der Lichtquelle 1.

Figur 2 zeigt eine erste vorteilhafte Ausgestaltung der Lichtquelle 1. Die Lichtquelle 1 umfasst beispielsgemäß eine Mehrzahl von Pumpquellen 20, beispielsweise Laserdioden, welche Pumplicht 21 einer ersten Wellenlänge emittieren. Das Pumplicht 21 wird auf eine Mehrzahl von Luminophoren 22 gerichtet, welche durch einen physikalischen Prozess, beispielsweise Phosphoreszenz, Fluoreszenz oder Szintillation, das Pumplicht 21 in polychromatisches Licht 23 umwandeln. Beispielsgemäß umfasst das polychromatisches Licht 23 ein Spektrum von Wellenlängen, die Wellenlängen des Emissionsspektrums sind typischerweise größer als die Wellenlänge des Pumplichts 21. Das polychromatische Licht 23 kann bevorzugt neben dem Emissionsspektrum auch einen Teil des Pumplichts 21 umfassen.

Um eine näherungsweise gleichmäßige Verteilung der Emissionsintensität entlang der Austrittsfläche 24 der Lichtquelle 1 zu erhalten, wird ein Homogenisator 25 eingesetzt. Dieser besteht bevorzugt aus einer dünnen Glasplatte, welche in einer Raumrichtung als Lichtwellenleiter fungiert. Hierdurch wird vorteilshafterweise das polychromatische Licht 23 in Richtung der Austrittsfläche 24 geleitet und verteilt sich dabei entlang der ausgedehnten Dimension des Homogenisators 25 nahezu gleichmäßig. Das Licht tritt dann als homogenisiertes Messlicht 26 aus der Lichtaustrittsfläche 24 aus.

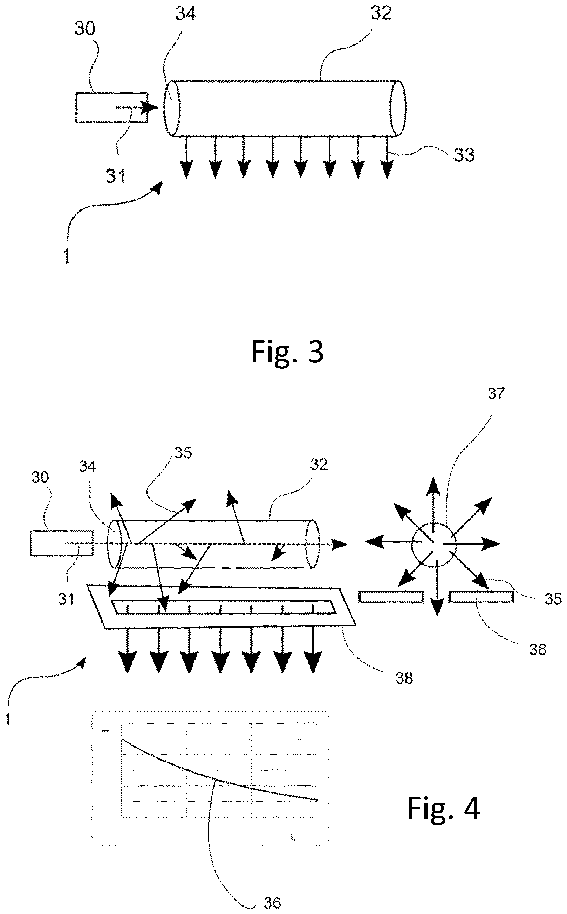

Figur 3 zeigt eine zweite vorteilhafte Ausgestaltung der Lichtquelle 1. Die beispielsgemäße Lichtquelle 1 umfasst eine Pumpquelle 30, beispielsweise eine Laserdiode, welche Pumplicht 31 einer ersten Wellenlänge emittiert. Das Pumplicht 31 wird auf eine stabförmigen Luminophor 32 gerichtet, welcher durch einen physikalischen Prozess, beispielsweise Phosphoreszenz, Fluoreszenz oder Szintillation, das Pumplicht 31 in polychromatisches Licht 33 umwandeln.

Das Pumplicht 31 tritt dabei bevorzugt durch eine Grundfläche 34 des stabförmigen Luminophors 32 ein. Die hat den Vorteil, dass das Pumplicht den gesamten Stab der Länge nach durchtritt, so dass möglichst viel Pumplicht 31 umgewandelt wird.

Als Messlicht wird das Licht 33 verwendet, welches aus einer Seitenfläche des stabförmigen Luminophors 32 austritt.

Durch die Natur des physikalischen Prozesses (beispielsweise Phosphoreszenz, Fluoreszenz oder Szintillation) bedingt, wird das Licht in aller Regel nicht gleichmäßig entlang der Länge des stabförmigen Luminophors emittiert. Dies ist in Figur 4 illustriert. Typischerweise wird nahe der Eintrittsfläche am meisten Licht 35 emittiert, wobei die Emission über die Länge exponentiell abnimmt, wie dies durch die Schaubildlinie 36 illustriert ist. Zudem ist die Emission näherungsweise in alle Raumrichtungen homogen und nicht nur in Richtung der verwendeten Austrittsfläche gerichtet. Die Ansicht von der Stirnfläche 37 aus zeigt die radiale Emissionsverteilung. Um einen Lichtaustritt nur entlang der gewünschten Lichtaustrittsfläche zu gewährleisten, wird beispielsgemäß eine Schlitzblende 38 eingesetzt. Die Richtung der längeren Ausdehnung der Öffnung entspricht dabei der Längsrichtung des stabförmigen Luminophors 32.

Nachstehend werden mehrere vorteilhafte Möglichkeiten aufgezeigt, das Licht in Richtung der Austrittsfläche der Lichtquelle zu konzentrieren und in Richtung der länglichen Ausdehnung zu homogenisieren. Die einzelnen Maßnahmen können vorteilhaft miteinander kombiniert werden.

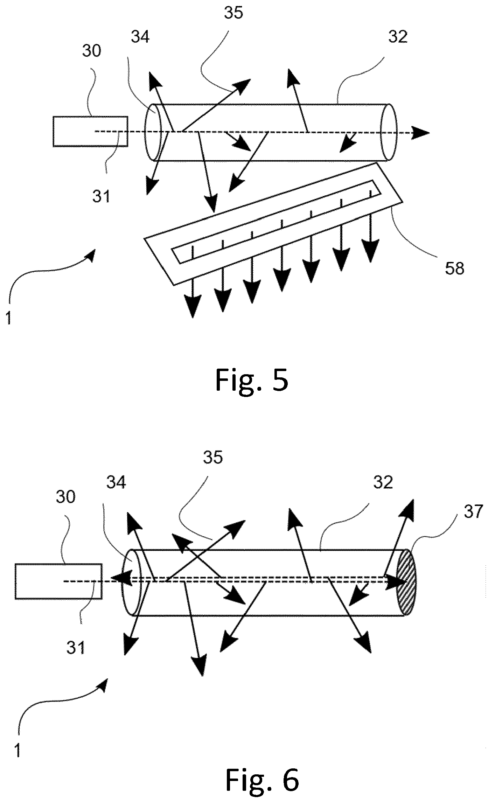

Figur 5 zeigt eine solche vorteilhafte Möglichkeit. Hier wird eine Schlitzblende 58 eingesetzt, welche relativ zur Längsachse des stabförmigen Luminophors 32 verkippt ist. Dabei ist die Schlitzblende 58 in der Nähe der Eintrittsfläche 34 des Luminophors 32 weiter entfernt als in der Nähe der gegenüberliegenden Stirnfläche. Hierdurch tritt ein geringerer Anteil des in der Nähe der Eintrittsfläche 34 emittierten Lichts durch die Blende, so dass die höhere Emission zumindest teilweise ausgeglichen wird.

Figur 6 zeigt eine weitere vorteilhafte Ausgestaltungsform zur Homogenisierung. Hierbei ist die der Eintrittsfläche 34 gegenüberliegende Stirnfläche 37 des stabförmigen Luminophors 32 verspiegelt ausgeführt, so dass Pumplicht 31, welches den Luminophor 32 komplett durchtritt, hier gespiegelt wird und nochmals in entgegengesetzte Richtung durchtritt. Die Emissionen entlang Hin- und Rückweg ergänzen sich teilweise, so dass die Intensitätsunterschiede teilweise ausgeglichen werden.

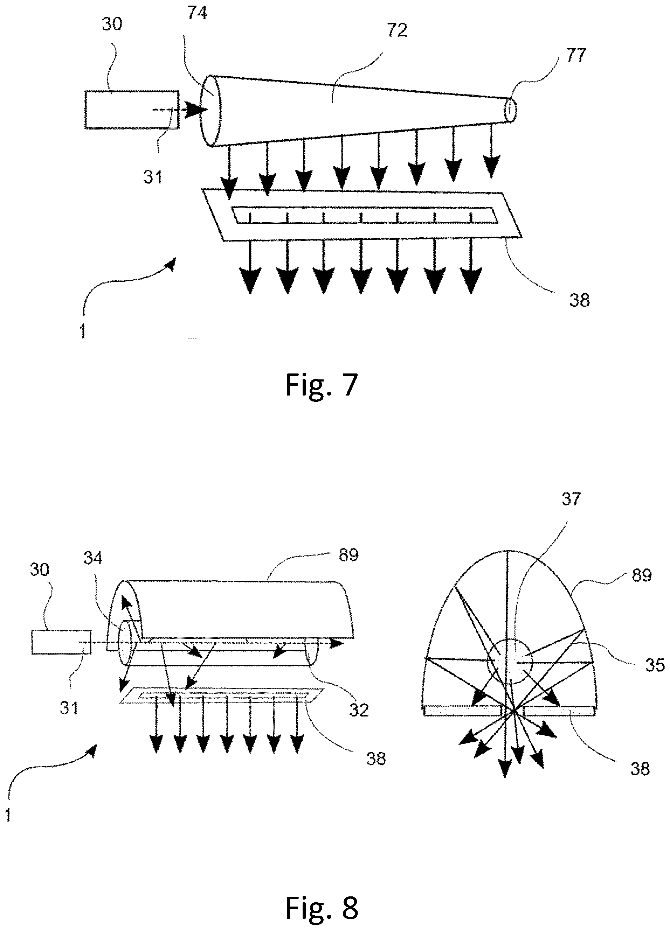

Figur 7 zeigt eine weitere vorteilhafte Ausgestaltungsform zur Homogenisierung. Hierbei ist der Luminophor 72 als Kegelstumpf ausgeführt. Die der Eintrittsfläche 74 gegenüberliegende Stirnfläche 77 ist dabei kleiner ausgeführt als die Eintrittsfläche 74. Da der Luminophor aufgrund der hohen Brechzahl als Wellenleiter für das Pumplicht 31 fungiert, wird das Pumplicht 31 bei durchtreten des Luminophors 72 aufgrund des sich verringernden Querschnitts konzentriert. Hierdurch steigt die Emission pro Volumeneinheit entlang der Strecke, wodurch die abnehmende Emission zumindest teilweise kompensiert wird. Der Abbau der Pumplichtleistung entlang der Strecke wird mit Querschnittsverringerung beantwortet, so dass die Pumplicht-Intensität auf einem gleichmäßigen Level gehalten wird.

Figur 8 zeigt eine weitere vorteilhafte Ausgestaltungsform der Lichtquelle 1 zur Homogenisierung und Konzentrierung des Lichtes. Hierbei umfasst die Lichtquelle 1 einen Parabolspiegel 89. Der Parabolspiegel ist derart angeordnet, dass zumindest ein Teil des Lichtes, welches den stabförmigen Luminophor 32 nicht in Richtung der Schlitzblende 38 verlässt, in Richtung der Schlitzblende gespiegelt wird. Vorzugsweise handelt es sich bei dem Parabolspiegel 89 um eine Parabolrinne, d.h. eine parabolisch geformte Rinne. Im senkrecht zur Rinnenachse geführten Schnitt ist die konkave Grenzlinie eine Parabel. Vorteilhafterweise ist die Rinnenachse parallel zur Achse des Luminophors 32.

In einer vorteilhaften Variante ist der Querschnitt der Parabolrinne über deren Länge verändert, insbesondere ist die Rinne an verschiedenen Stellen unterschiedlich tief, beispielsweise an einem Ende tiefer als am anderen oder in der Mitte tiefer als nahe den Enden.

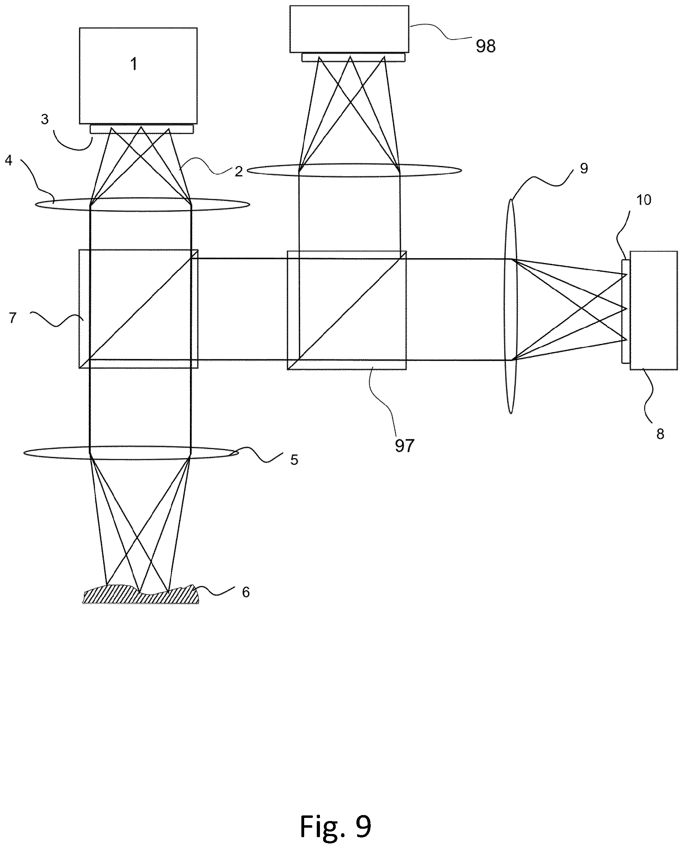

Figur 9 zeigt eine schematische Darstellung einer alternativen chromatisch-konfokalen Messeinrichtung. Die Messeinrichtung entspricht im Wesentlichen der in Fig. 1 gezeigten Messeinrichtung, außer, dass ein zweiter Strahlteiler 97 zwischen dem ersten Strahlteiler 7 und der ersten Empfangs- und Auswerteeinheit 8 angeordnet ist. Dieser zweite Strahlteiler 97 lenkt einen Teil des vom Messobjekt 6 reflektierten Messlichts 2 auf eine zweite Empfangs- und Auswerteeinheit 98.

Beispielhafterweise handelt es sich bei der zweiten Empfangs- und Auswerteeinheit 98 um eine bildgebende Einheit, vorzugsweise eine Kamera.

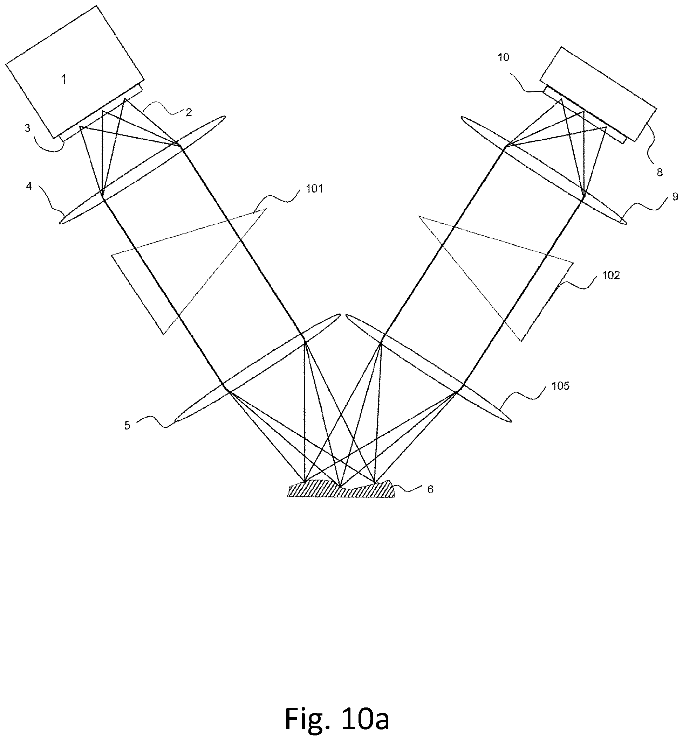

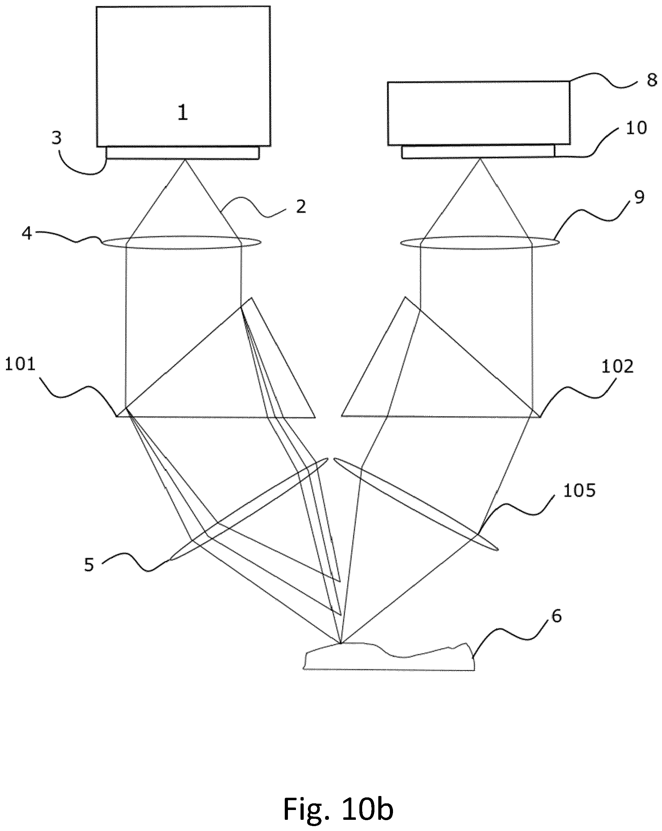

Die chromatisch-konfokale Messeinrichtung der Figuren 10a und 10b umfasst wie die der Figur 1 eine Lichtquelle 1, eine erste konfokale Blende 3 und eine Abbildungsoptik, bestehend aus Linsen 4 und 5 und einem zusätzlichen, hier als Prima ausgeführten optischen Element 101, durch welche das Messlicht 2 auf das Messobjekt 6 gelenkt wird. Die konfokale Blende 3 ist hier als Schlitzblende ausgeführt, wobei die Richtung des Schlitzes senkrecht zur Zeichenebene steht.

Die Symmetrieachse der Linse 5 ist dabei schräg zur durchschnittlichen Oberflächennormalen des Messobjektes angeordnet. Die Abbildungsoptik ist so ausgeführt, dass zusätzlich zur chromatischen Aberration längs der Achse der Abbildungsoptik auch eine signifikante transversale chromatische Fokusverschiebung auftritt. Diese wird vorzugsweise durch das zusätzliche optische Element 101 bereitgestellt. Entsprechend wird das vom Messobjekt 6 reflektierte Messlicht 2 unter einem Winkel von einer zweiten Abbildungsoptik, bestehend aus Linsen 105 und 9, sowie einem optischem Element 102 eingefangen. Bevorzugt ist die zweite Abbildungsoptik spiegelsymmetrisch zur ersten Abbildungsoptik ausgeführt.

Entsprechend des Ausführungsbeispiels der Figur 1 umfasst die Messeinrichtung eine zweite konfokale Apertur 10 und eine erste Empfangs- und Auswerteeinheit 8.

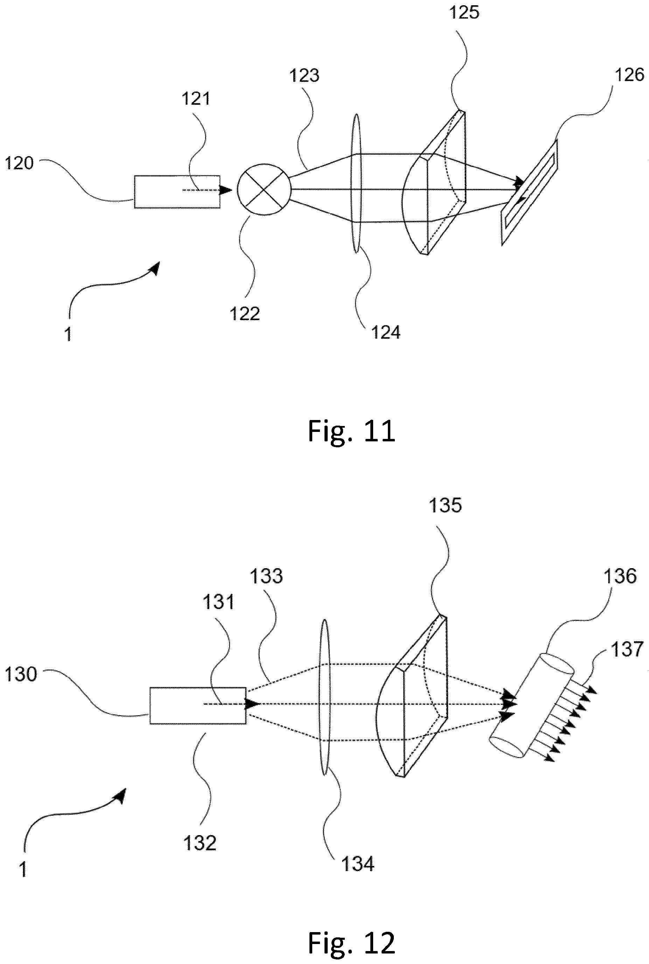

Figur 11 zeigt eine weitere vorteilhafte Ausgestaltung der Lichtquelle 1. Die beispielsgemäße Lichtquelle 1 umfasst eine Pumpquelle 120, beispielsweise eine Laserdiode, welche Pumplicht 121 einer ersten Wellenlänge emittiert. Das Pumplicht 121 wird auf einen Luminophor 122 gerichtet, welcher durch einen physikalischen Prozess, beispielsweise Phosphoreszenz, Fluoreszenz oder Szintillation, das Pumplicht 121 in polychromatisches Licht 123 umwandelt. Beispielsgemäß umfasst das polychromatische Licht 123 ein Spektrum von Wellenlängen, die Wellenlängen dieses Spektrums sind typischerweise größer als die Wellenlänge des Pumplichts 121. Das polychromatische Licht 123 kann bevorzugt auch einen Teil des Pumplichts 121 umfassen.

Um das Licht 123 auf eine längliche Austrittsfläche zu lenken, wird es zunächst mittels einer vorzugsweise asphärischen Linse 124 kollimiert und durchtritt anschließend eine Zylinderlinse 125, welche das Licht wieder auf ein Liniensegment fokussiert. Vorzugsweise wird am Ort der Fokuslinie eine Spaltblende 126 angeordnet, deren Spaltöffnung die längliche Austrittsfläche der Lichtquelle 1 darstellt.

Figur 12 zeigt eine weitere vorteilhafte Ausgestaltung der Lichtquelle 1. Die beispielsgemäße Lichtquelle 1 umfasst eine Pumpquelle 130, beispielsweise Laser, welche Pumplicht 131 einer ersten Wellenlänge emittiert. Das Pumplicht 131 wird durch eine asphärische Linse 134 zunächst kollimiert und anschließend durch eine Zylinderlinse 135 auf ein Liniensegment fokussiert. Am Ort der Fokuslinie ist ein Luminophor 136 angeordnet, welcher durch einen physikalischen Prozess, beispielsweise Phosphoreszenz, Fluoreszenz oder Szintillation, das Pumplicht 131 in polychromatisches Licht 137 umwandelt.

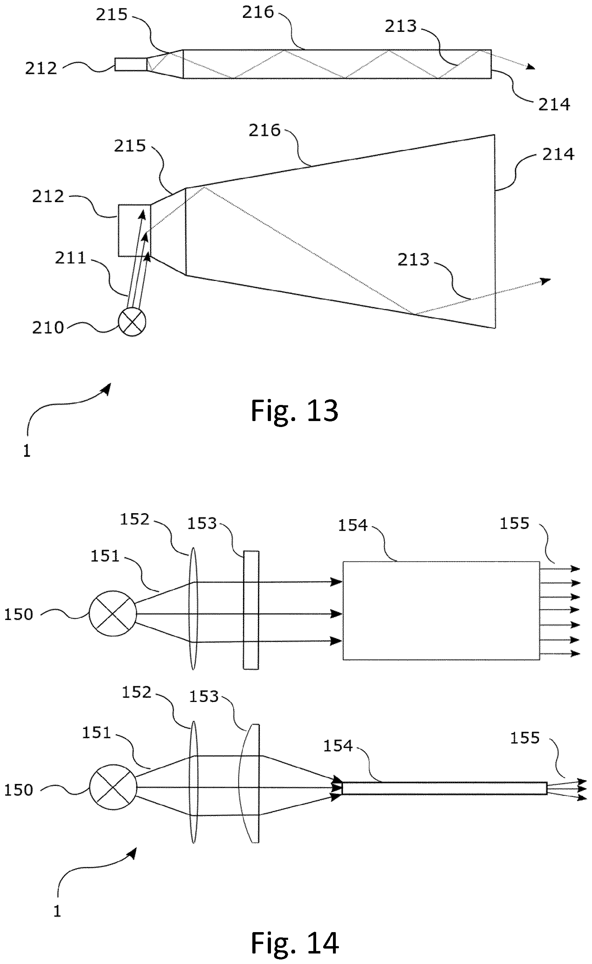

Figur 13 zeigt eine weitere vorteilhafte Ausgestaltung der Lichtquelle 1. Die beispielgemäße Lichtquelle umfasst eine Pumplichtquelle 210, die Pumplicht 211 auf einen Wellenleiter 212 richtet, der einen Teil des Pumplichts auf einen keilförmigen Luminophor 215 leitet, so dass das Pumplicht auf die gesamte Eintrittsfläche des Luminophors trifft.

Der Luminophor 215 wandelt das Pumplicht in polychromatisches Licht 213 und ist so ausgebildet, dass er als Wellenleiter für das polychromatische Licht wirkt. Der Luminophor ist in zwei Raumrichtungen keilförmig ausgebildet, wobei die beiden Raumrichtungen orthogonal zur Propagationsrichtung des Lichts sind. In der Figur 13 sind exemplarisch Lichtstrahlen gezeigt, die den geometrischen Pfad des polychromatischen Lichts zeigen.

Das Licht, das unter großen Winkeln zur Propagationsrichtung im Luminophor 215 verläuft, trifft auf eine der Seitenflächen. Aufgrund der Keilförmigkeit des Wellenleiters läuft das Licht nach der Reflexion unter kleineren Winkeln zur Propagationsrichtung weiter. Der Luminophor ist so ausgebildet, dass die Seitenlänge an der Austrittsfläche in einer Raumrichtung der gewünschten Seitenlänge der Lichtausrittsfläche 214 in derjenigen Raumrichtung entspricht, in der die Lichtaustrittsfläche nur wenig ausgedehnt ist.

Das polychromatische Licht wird weiter in einem zweiten keilförmigen Wellenleiter 216 propagiert, wobei der zweite Wellenleiter nur in einer Raumrichtung keilförmig ausgebildet ist. Durch Reflexion an den Seitenflächen wird der Winkel des Lichts zur Propagationsrichtung in einer Raumrichtung weiter abgeflacht. Der zweite Wellenleiter ist so ausgebildet, dass die Seitenlänge an der Lichtaustrittsfläche derjenigen Seitenlänge der Lichtaustrittsfläche entspricht, in der die Lichtaustrittsfläche ausgedehnt ist.

Durch die Keilförmigkeit der Wellenleiter verlässt das polychromatische Licht die Lichtaustrittsfläche unter geringen Öffnungswinkel, so dass die endliche Apertur der Messvorrichtung ausreicht, um das Licht vollumfänglich als Messlicht zu nutzen.

Figur 14 zeigt eine weitere vorteilhafte Ausgestaltung der Lichtquelle 1. Die beispielgemäße Lichtquelle 1 umfasst eine Pumpquelle 150, beispielsweise eine Laserdiode, welche Pumplicht 151 einer ersten Wellenlänge emittiert. Das Pumplicht wird auf eine Seitenfläche eines plattenförmigen Luminophors 154 gerichtet.

Zu diesem Zweck wird das Pumplicht zunächst durch eine Kollimationsoptik 152 kollimiert und anschließend durch eine Zylinderoptik 153 in derjenigen Richtung fokussiert, in der der plattenförmige Luminophor eine geringe Ausdehnung besitzt. Durch die Fokussierung in einer Richtung wird erreicht, dass die Verteilung des Pumplichts auf der Eintrittsfläche weitgehend homogen ist und ein möglichst großer Teil des von der Pumplichtquelle erzeugten Pumplichts in den Luminophor eingekoppelt werden kann.

Der Luminophor wandelt Pumplicht in polychromatisches Licht 155 um. Ein Teil des im plattenförmigen Luminophors erzeugten polychromatischen Lichts trifft, gegebenenfalls nach Reflexion an einer der Grundflächen oder einer der Seitenflächen, auf die Seitenfläche, die der Eintrittsfläche des Pumplichts gegenüberliegt, und tritt durch diese Seitenfläche aus dem Luminophor aus.

Um die Ausbeute an Messlicht zu erhöhen, können die Grundflächen und diejenigen Seitenflächen, die nicht als Lichtaustrittsfläche genutzt werden, verspiegelt ausgeführt werden.

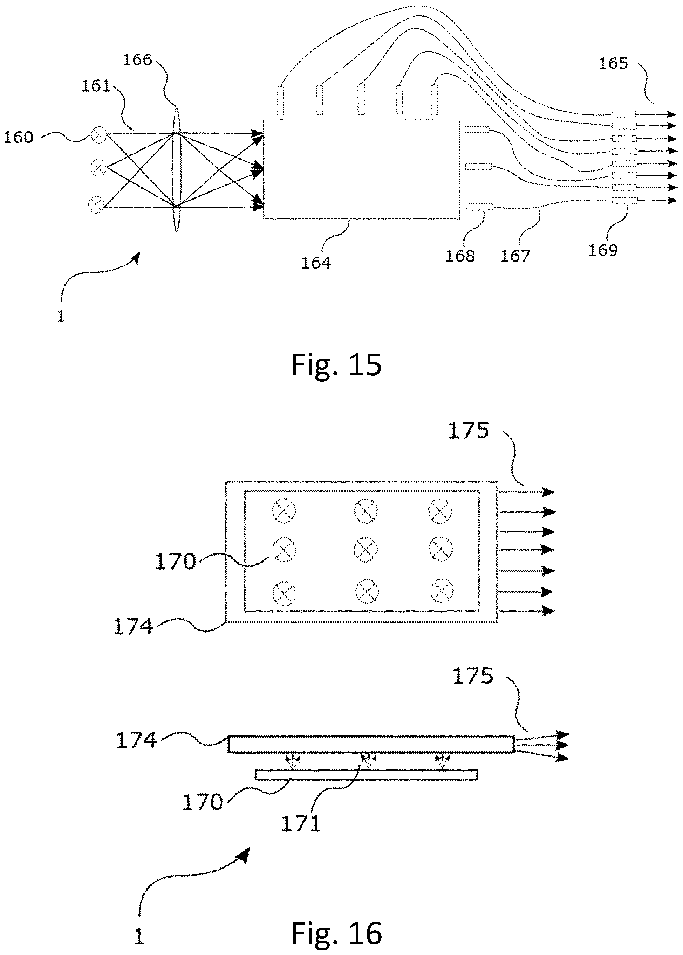

Figur 15 zeigt eine weitere vorteilhafte Ausgestaltung der Lichtquelle 1. Die Lichtquelle umfasst hier mehrere Pumplichtquellen 160, beispielsweise LEDs, die entlang einer Linie positioniert sind und die Pumplicht 161 erzeugen. Die Linie aus Pumplichtquellen wird durch eine Abbildungsoptik 166 auf eine Seitenfläche eines plattenförmigen Luminophors 164 abgebildet, die als Eintrittsfläche für das Pumplicht dient

Die Linie, entlang derer die Pumplichtquellen angeordnet sind, ist dabei parallel zu derjenigen Richtung, in der die Eintrittsfläche ausgedehnt ist, womit eine weitgehend homogene Ausleuchtung der Eintrittsfläche erreicht wird. Vorteilhafterweise ist die Abbildungsoptik so ausgeführt, dass die Ausdehnung der LEDs in der Richtung senkrecht zur Linienrichtung vergleichbar mit der Dicke des plattenförmigen Luminophors ist.

Im Falle von LEDs von 200µm Breite und einer Platte mit 200µm Dicke ist beispielsweise eine 1:1 Abbildung vorteilhaft. Die Apertur der Abbildungsoptik ist möglichst groß zu halten, damit möglichst viel Pumplicht in den plattenförmigen Luminophor eingekoppelt werden kann.

In einer alternativen Ausführung lässt sich die linienhafte Anordnung aus Pumplichtquellen auch direkt an der Seitenfläche des plattenförmigen Luminophors anbringen, so dass das Pumplicht ohne Abbildungsoptik in den plattenförmigen Luminophor eingekoppelt werden kann.

Die in Figur 15 gezeigte Lichtquelle umfasst eine Vielzahl von Fasern 167, wobei die Fasern jeweils ein erstes Faserende 168 aufweisen, das polychromatisches Licht empfängt, das vom Luminophor durch eine der Seitenflächen abgestrahlt wird.

Die Fasern weisen jeweils ein zweites Faserende 169 auf, wobei das zweite Faserende polychromatisches Licht 165 aussendet. Die zweiten Faserenden sind in einer Linie angeordnet und bilden eine Lichtaustrittsfläche.

Durch das Einfangen von polychromatischen Licht, das den Lumiophor durch mehr als eine Seitenfläche verlässt, wird die Ausbeute erhöht.

Figur 16 zeigt eine weitere vorteilhafte Ausgestaltung der Lichtquelle 1. Die beispielgemäße Lichtquelle 1 umfasst eine flächenhafte Pumplichtquelle 170, die hier als in zwei Raumrichtungen ausgedehnter Array von LEDs ausgeführt ist.

Das von der Pumplichtquelle erzeugte Pumplicht 171 tritt durch eine erste Grundfläche des plattenförmigen Luminophors 174 ein und erzeugt polychromatisches Licht 175, das den Luminophor durch eine der Seitenflächen verlässt. Die zweite Grundfläche des Luminophors kann verspiegelt ausgeführt sein, damit das Pumplicht auch nach Reflexion an der zweiten Grundfläche zur Erzeugung von polychromatischem Licht beitragen kann.

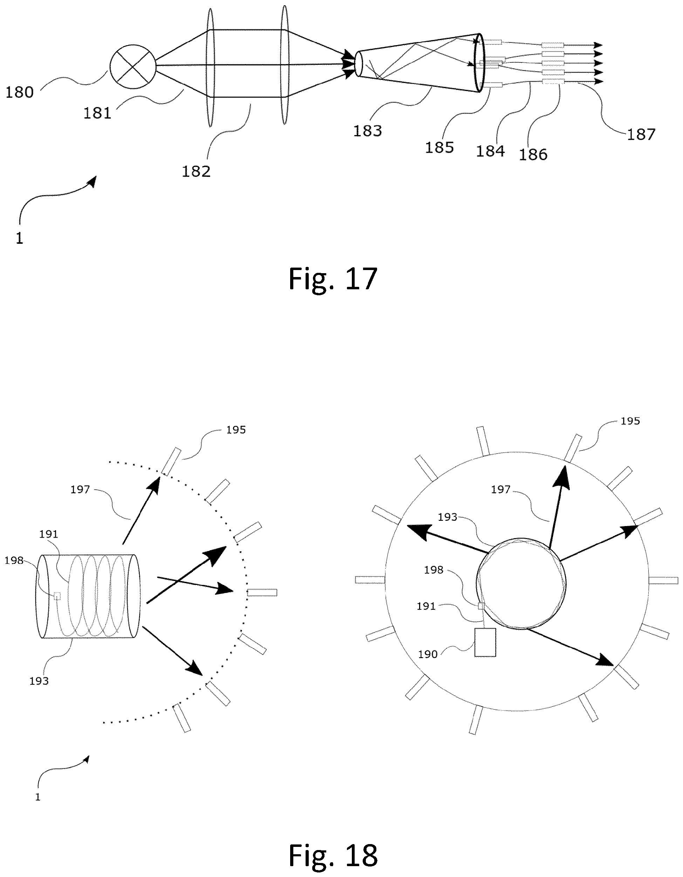

Figur 17 zeigt eine weitere vorteilhafte Ausgestaltung der Lichtquelle 1. Die beispielgemäße Lichtquelle umfasst eine Pumpquelle 180, beispielsweise einer Laserdiode, welche Pumplicht 181 einer ersten Wellenlänge emittiert. Das Pumplicht wird durch eine Abbildungsoptik 182 auf die Deckfläche eines Luminophors 183 gerichtet, der die Form eines Kegelstumpfs besitzt.

Die Lichtquelle umfasst eine Vielzahl optischer Fasern 184, die jeweils ein erstes Faserende 185 aufweisen, wobei die ersten Faserenden in einer flächenhaften Anordnung in der Nähe der Grundfläche des Luminophors positioniert sind und das vom Luminophor erzeugte polychromatische Licht aufnehmen, sowie jeweils ein zweites Faserende 186, wobei die zweiten Faserenden in einer Linie angeordnet sind, das polychromatische Licht 187 aussenden und gemeinsam die Lichtaustrittsfläche der Lichtquelle bilden.

Um den Anteil des Lichts zu minimieren, der unter einem zu steilen Winkel auf die ersten Faserenden trifft, und somit nicht in die Fasern eingekoppelt werden kann, ist der Luminophor in Form eines Kegelstumpfs ausgeführt.

In der Figur 17 sind exemplarisch Lichtstrahlen gezeigt, die den geometrischen Pfad von Fluoreszenzlicht demonstrieren, das vom Luminophor erzeugt wurde und einen großen Winkel zur Symmetrieachse des Kegelstumpfs besitzt. Durch sukzessive Reflexionen an der Innenseite der Mantelfläche des Kegelstumpfs wird der Winkel zwischen den Lichtstrahlen und der Symmetrieachse des Kegelstumpfs immer weiter reduziert, insbesondere soweit, dass das Licht in die Faserenden eingekoppelt werden kann.

Die flächenhafte Anordnung der Faserenden kann insbesondere so ausgeführt sein, dass der Teil der Grundfläche, der vom polychromatischen Licht durchtreten wird, möglichst vollständig abgedeckt wird, so dass ein möglichst großer Teil des Lichts in die Fasern eingekoppelt und weitergeführt werden kann.

Figur 18 zeigt eine weitere vorteilhafte Ausgestaltung der Lichtquelle 1. Die beispielgemäße Lichtquelle umfasst eine Pumpquelle 190, beispielsweise einer Laserdiode, welche Pumplicht 191 einer ersten Wellenlänge emittiert. Die Lichtquelle umfasst des Weiteren einen zylinderförmigen Luminophor 193.

Der zylinderförmige Luminophor ist mit einem Eintrittsfenster 198 versehen, durch das das Pumplicht in den Luminophor eingekoppelt wird. Wenn das Pumplicht auf Höhe des Eintrittsfensters fokussiert wird, kann die Ausdehnung des Eintrittsfensters sehr klein gehalten werden. Beispielsweise kann eine Ausdehnung von 10µm des Eintrittsfensters ausreichend sein.

Das Pumplicht wird dabei so eingekoppelt, dass das Pumplicht unter einem flachen Winkel auf die Innenseite der Mantelfläche trifft und Totalreflexion erfährt. Dieses Verhalten wiederholt sich bei sukzessiven Reflexionen an der Innenseite der Mantelfläche, so dass das Pumplicht auf eine Spiralbahn innerhalb des zylinderförmigen Luminophors gezwungen wird.

Vorteilhaferweise ist der zylinderförmige Luminophor so ausgeführt, dass das Pumplicht auf seinem Weg entlang der Spiralbahn vom Eintrittsfenster bis zur Grundfläche des Zylinders zum größten Teil zur Erzeugung von polychromatischem Licht beiträgt. Bei einer typischen mittleren freien Weglänge des Pumplichts im Luminophor von 200µm ist dies beispielsweise bei einer Bahnlänge von 1mm gewährleistet.

Der zylinderförmige Luminophor kann dabei sehr kompakt umgesetzt sein und gleichzeitig eine hinreichend große Bahnlänge für das Pumplicht bereitstellen. Beispielsweise kann der Zylinder einen Radius von 25µm aufweisen und die Ganghöhe der Spiralbahn 20µm betragen (wodurch bei einem Eintrittsfenster von 10µm Ausdehnung gesichert ist, dass das Pumplicht nach der ersten Umrundung den zylinderförmigen Luminophor nicht wieder durch das Eintrittsfenster verlässt).

Dabei wird bei einer Höhe von 150 µm des Zylinders erreicht, dass das Pumplicht auf dem Weg vom Eintrittsfenster bis zur Grundfläche 6 Umrundungen und somit eine Weglänge von mehr als 1mm zurücklegen kann.

Das polychromatische Licht 197 wird vom Luminophor über die Mantelfläche und die Grundflächen in alle Raumrichtungen abgestrahlt. Die Lichtquelle umfasst eine Vielzahl von Fasern, die jeweils erste Faserenden 195 aufweisen, die auf einer Fläche angeordnet sind, die den Luminophor teilweise umschließt. Vorzugsweise sind die Faserenden dabei möglichst dicht gepackt, um einen möglichst großen Teil des polychromatischen Lichts aufzufangen und weiterzuleiten.

Die jeweils zweiten Faserenden der Fasern sind in einer Linie angeordnet und bilden eine längliche Lichtaustrittsfläche.

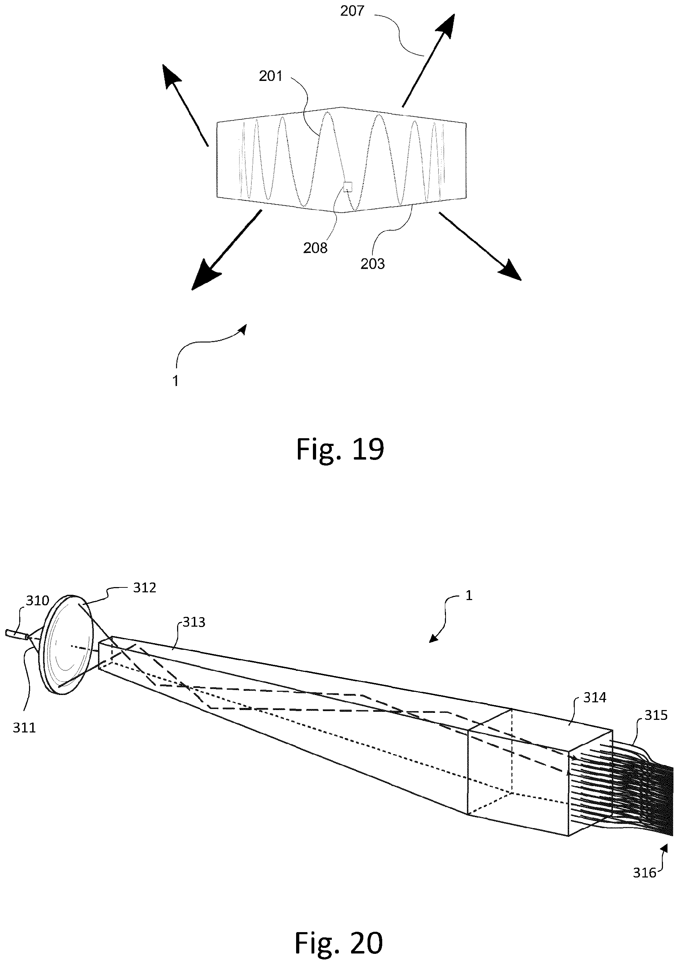

Figur 19 zeigt eine weitere vorteilhafte Ausgestaltung der Lichtquelle 1. Die beispielgemäße Lichtquelle umfasst einen Luminophor 203, der in Form zweier Kegelstümpfe ausgeführt ist, die an der Grundfläche verbunden sind. Das Pumplicht 201 wird durch ein Eintrittsfenster 208 in den Luminophor eingekoppelt, wobei das Pumplicht im Luminophor durch sukzessive Totalreflexionen auf eine Spiralbahn gezwungen wird und polychromatisches Licht 207 erzeugt.

Aufgrund des Öffnungswinkels des Kegelstumpfs verringert sich dabei zunehmend die Bahnhöhe des Pumplichts auf dem Weg im ersten Kegelstumpf vom Eintrittsfenster zur ersten Deckfläche, bis sich das Pumplicht zurück zur Grundfläche bewegt. Das Pumplicht kann im zweiten Kegelstumpf weiterlaufen, wo sich das Verhalten wiederholt.

Durch diese Ausgestaltung des Luminophors lassen sich mit einer sehr kompakten Bauweise große Weglängen des Pumplichts im Luminophor erzielen. Damit wird auch die Verwendung von Photolumineszenzmaterialen ermöglicht, deren Halbwertslänge größer als 1 mm ist, z.B. sehr transparente Phosphor-in-Glas Materialien, die wegen ihrer Wärmefestigkeit, der leichteren Verarbeitbarkeit und der Erzeugung von breitbandigen und gleichmäßig hellen Spektren vorteilhaft sind im Vergleich zu Einkristallen.

Figur 20 zeigt eine weitere vorteilhafte Ausgestaltung der Lichtquelle 1, die im Wesentlichen der in der Figur 17 gezeigten Lichtquelle entspricht. Die beispielgemäße Lichtquelle umfasst eine Pumpquelle 310, beispielsweise eine Laserdiode, welche Pumplicht 311 einer ersten Wellenlänge emittiert. Das Pumplicht 311 wird durch eine Abbildungsoptik 312 auf einen Luminophor 313 gerichtet, der bei diesem Ausführungsbeispiel die Form eines quadratischen Pyramidenstumpfes hat, über dessen Deckfläche das Pumplicht 311 eingekoppelt wird. Der Querschnitt des Luminophors 313 ist somit quadratisch und nimmt mit zunehmenden Abstand von der Deckfläche kontinuierlich bis zur Grundfläche des Pyramidenstumpfes zu. Die Seitenflächen des Pyramidenstumpfes sind verspiegelt, so dass über die Seitenflächen kein Licht nach außen treten kann.

Die Grundfläche grenzt bei diesem Ausführungsbeispiel an eine quadratische Seitenfläche eines Quaders aus Glas an, der einen Homogenisator 314 bildet. Bei ausreichender Länge des Luminophors 313 kann der Homogenisator 314 entfallen.

Die Lichtquelle 1 umfasst außerdem eine Umformungseinrichtung, die durch eine Vielzahl optischer Fasern 315 gebildet wird. Erste Faserenden der Fasern 315 sind flächenhaft in der Nähe der anderen quadratischen Seitenfläche des Homogenisators 314 angeordnet und nehmen das vom Luminophor erzeugte und vom Homogenisator 314 weitergeleitete polychromatische Licht auf. Die zweiten Faserenden der optischen Fasern 315 sind entlang einer Linie angeordnet und definieren gemeinsam die linienförmige Austrittsfläche 316 der Lichtquelle 1.

Der pyramidenstumpfförmige Luminophor 313 minimiert den Anteil des Lichts, der unter einem zu steilen Winkel auf die ersten Faserenden der optischen Fasern 315 trifft und somit nicht in die Fasern 315 eingekoppelt werden kann. Gegenüber der konischen Form des Luminophors, wie sie in der Figur 17 gezeigt ist, hat die pyramidale Form den Vorteil, dass sie sich aus den oft schwer bearbeitbaren luminophoren Werkstoffen leichter herstellen lässt. Außerdem hat sich überraschenderweise gezeigt, dass die pyramidale Form zu einer gleichmäßigeren Intensitätsverteilung an der Grundfläche des Luminophoren führt. Bei rotationssymmetrischen Luminophoren beobachtet man in der Regel eine unerwünschte Konzentration des polychromatischen Lichts auf der Symmetrieachse.

In der Figur 20 sind mit gestrichelten Linien Lichtstrahlen angedeutet, die den geometrischen Pfad von Fluoreszenzlicht demonstrieren, das vom Luminophor 313 erzeugt wurde und zunächst einen großen Winkel zur Symmetrieachse des Pyramidenstumpfs besitzt. Durch sukzessive Reflexionen an der Innenseite der Mantelfläche des Pyramidenstumpfs wird der Winkel zwischen den Lichtstrahlen und der Symmetrieachse des Kegelstumpfs so lange reduziert, bis das Licht in die Enden der optischen Fasern 315 verlustarm eingekoppelt werden kann.

Anders als aus Gründen der Übersichtlichkeit dargestellt, kann die flächenhafte Anordnung der Faserenden insbesondere so ausgeführt sein, dass der Teil der Grundfläche des Homogenisators 314 (oder bei dessen Fehlen des Luminophors 313), der vom polychromatischen Licht durchtreten wird, möglichst vollständig abgedeckt wird, so dass ein möglichst großer Teil des Lichts in die Fasern 315 eingekoppelt und weitergeführt werden kann.

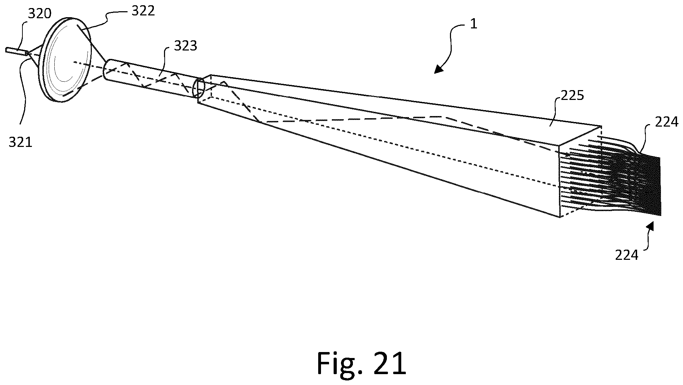

Figur 21 zeigt eine weitere vorteilhafte Ausgestaltung der Lichtquelle 1, die Elemente aus den in den Figuren 13, 17 und 20 gezeigten Ausführungsbeispielen vereint.

Die beispielgemäße Lichtquelle umfasst eine Pumpquelle 320, beispielsweise eine Laserdiode, die Pumplicht 321 einer ersten Wellenlänge emittiert. Das Pumplicht 321 wird durch eine Abbildungsoptik 322 auf die Stirnfläche eines stabförmigen Luminophors 323 gerichtet. Bei diesem Ausführungsbeispiel hat der Stab einen kreisförmigen Querschnitt. Es kommen aber auch ovale, quadratische, rechteckige oder andere regelmäßige oder unregelmäßige polygone Querschnitte in Betracht. Die Seitenflächen des Luminophors 323 sind verspiegelt, so dass über die Seitenflächen kein Licht nach außen treten kann.

Die andere Stirnfläche des stabförmigen Luminophors 323 grenzt bei diesem Ausführungsbeispiel an eine quadratische Deckfläche eines Homogenisators 324 an, der aus Glas besteht und die Form eines Pyramidenstumpfes hat. Der Querschnitt des Homogenisators ist quadratisch und nimmt mit zunehmenden Abstand von dem Luminophoren 323 kontinuierlich bis zur Grundfläche des Pyramidenstumpfes zu.

Die Lichtquelle 1 umfasst außerdem eine Umformungseinrichtung, die auch hier durch eine Vielzahl optischer Fasern 325 gebildet wird. Erste Enden der Fasern 325 sind flächenhaft in der Nähe der quadratischen Grundfläche des Homogenisators 324 angeordnet und nehmen das vom Luminophor erzeugte und vom Homogenisator 324 weitergeleitete polychromatische Licht auf. Die zweiten Enden der optischen Fasern 325 sind entlang einer Linie angeordnet und definieren gemeinsam die linienförmige Austrittsfläche 326 der Lichtquelle 1.

Der Homogenisator 324 minimiert den Anteil des Lichts, der unter einem zu steilen Winkel auf die ersten Enden der optischen Fasern 325 trifft und somit nicht in die Fasern 325 eingekoppelt werden kann.

Gegenüber dem Ausführungsbeispiel gemäß der Figur 20 hat die in der Figur 21 gezeigte Lichtquelle 1 den Vorteil, dass die Geometrie des Luminophors 323 vor allem unter dem Gesichtspunkt einer leichten Herstellbarkeit festgelegt werden kann. Die kompliziertere, aber im Hinblick auf die Homogenisierung und die Einkopplung in die Faserenden sehr vorteilhafte Geometrie des pyramidalen Homogenisators 324 lässt sich hingegen leicht aus dem Werkstoff Glas realisieren. Die Umformung des polychromatischen Lichts in die linienförmige Austrittsfläche 326 wird auch bei diesem Ausführungsbeispiel von der durch die optischen Fasern 325 gebildeten Umformungseinrichtung übernommen.

Wichtige Aspekte der vorliegenden Erfindung sind in den nachfolgenden Sätzen zusammengefasst:
1. Chromatisch-konfokale Messvorrichtung zur Messung von Abständen und/oder Dicken von mehreren Stellen simultan oder eines in mindestens eine Raumrichtung ausgedehnten Bereichs eines Messobjekts, umfassend
   eine Lichtquelle (1), welche durch eine Lichtaustrittsfläche polychromatisches Messlicht (2) emittiert,
   mindestens eine erste konfokale Apertur (3, 10), durch die das Messlicht (2) tritt, wobei die erste konfokale Apertur (3, 10) eine Mehrzahl von punktförmigen Öffnungen oder mindestens eine schlitzförmige Öffnung umfasst,
   eine Abbildungsoptik (4, 5, 101), welche dazu eingerichtet ist, eine chromatische Fokusverschiebung des Messlichts hervorzurufen und die erste konfokale Apertur (3) in ein Messvolumen abzubilden, wobei verschiedene Wellenlängen in verschiedenen Höhen fokussiert sind,
   eine erste Empfangs- und Auswerteeinheit (8), welche ausgebildet ist, um die Intensität des vom Messobjekt reflektierten Messlichts in Abhängigkeit der Wellenlänge und der transversalen Position der Reflexionsstelle auf dem Messobjekt zu messen und daraus Abstände und/oder Dicken von mehreren Stellen oder eines in mindestens eine Raumrichtung ausgedehnten Bereichs des Messobjekts (6) zu bestimmen,
   dadurch gekennzeichnet, dass
   die Lichtquelle (1) eine lasergepumpte Luminophor-basierte Lichtquelle ist und die Austrittsfläche (24) länglich ist.
2. Messvorrichtung nach Satz 1, dadurch gekennzeichnet, dass die Lichtquelle (1) mindestens eine Pumpquelle (20) umfasst, welche Pumplicht (21) emittiert und auf einen Luminophor richtet, der das Pumplicht (21) in polychromatisches Licht (23) umwandelt.
3. Messvorrichtung nach Satz 2, dadurch gekennzeichnet, dass das polychromatische Licht (23) anschließend durch einen Homogenisator (25) tritt, derart, dass die Intensität des von der Austrittsfläche (24) austretenden Lichts (26) zumindest nahezu gleichmäßig verteilt ist.
4. Messvorrichtung nach Satz 2 oder 3, dadurch gekennzeichnet, dass der Luminophor (32) stabförmig ist, wobei durch eine Seitenfläche des stabförmigen Luminophors (32) austretendes Licht (33) als Messlicht verwendet wird.
5. Messvorrichtung nach Satz 4, dadurch gekennzeichnet, dass die Lichtquelle (1) eine Schlitzblende (38) umfasst, wobei der Schlitz der Schlitzblende (38) die Lichtaustrittsfläche der Lichtquelle (1) ist.
6. Messvorrichtung nach Satz 5, dadurch gekennzeichnet, dass die Schlitzblende (58) relativ zur Längsachse des stabförmigen Luminophors (32) verkippt ist.
7. Messvorrichtung nach einem der Sätze 4 bis 6, dadurch gekennzeichnet, dass die einer Eintrittsfläche (34), durch welche das Pumplicht (31) in den Luminophor (32) eintritt, gegenüberliegende Stirnfläche (37) des stabförmigen Luminophors (32) verspiegelt ausgeführt ist.
8. Messvorrichtung nach einem der Sätze 4 bis 7, dadurch gekennzeichnet, dass die Lichtquelle (1) einen Parabolspiegel (89) umfasst.
9. Messvorrichtung nach Satz 2 oder 3, dadurch gekennzeichnet, dass der Luminophor plattenförmig ist.
10. Messvorrichtung nach Satz 9, dadurch gekennzeichnet, dass der Luminophor so angeordnet ist, dass das Pumplicht durch eine Seitenfläche in den Luminophor eindringt und das Messlicht auf einer gegenüberliegenden Seitenfläche aus dem Luminophor austritt.
11. Messvorrichtung nach Satz 10, dadurch gekennzeichnet, dass Grundflächen des Luminophors entlang einer Seitenfläche, die senkrecht zu derjenigen Seitenfläche steht, an der das Pumplicht eindringt, einen Keilwinkel zwischen 1° und 10° einschließen.
12. Messvorrichtung nach Satz 9, dadurch gekennzeichnet, dass der Luminophor so angeordnet ist, dass das Pumplicht durch eine der beiden Grundflächen des Luminophors eindringt und das Messlicht aus einer senkrecht zur der Grundfläche angeordneten Seitenfläche des Luminophors austritt.
13. Messvorrichtung nach einem der vorhergehenden Sätze, dadurch gekennzeichnet, dass die Lichtquelle eine Umformungseinrichtung aufweist, die dazu eingerichtet ist, eine Lichtverteilung so umzuformen, dass der Querschnitt der Lichtverteilung länglicher wird.
14. Messvorrichtung nach Satz 13, dadurch gekennzeichnet, dass die Umformungseinrichtung eine Anordnung von Lichtleitfasern umfasst.
15. Messvorrichtung nach einem der Sätze 2 oder 3, dadurch gekennzeichnet, dass der Luminophor einen kegelstumpfförmigen Abschnitt hat.
16. Messvorrichtung nach Satz 14, dadurch gekennzeichnet, dass der Abschnitt eine gekrümmte Außenfläche hat, die verspiegelt ist, und dass der Abschnitt so angeordnet ist, dass das Pumplicht über die Deckfläche des Kegelstumpfes in den Luminophor eintritt.
17. Messvorrichtung nach einem der Sätze 2 oder 3, dadurch gekennzeichnet, dass der Luminophor einen zylindrischen Abschnitt hat, der so angeordnet ist, dass über die zylindrische Außenfläche eingekoppeltes Pumplicht durch Totalreflexion in dem Abschnitt gehalten wird.
18. Messvorrichtung nach einem der Sätze 2 oder 3, dadurch gekennzeichnet, dass der Luminophor (213) einen Abschnitt hat, der die Form eines vorzugsweise quadratischen Pyramidenstumpfes hat, der so angeordnet ist, dass das Pumplicht über die Deckfläche des Pyramidenstumpfes in den Luminophor (213) eintritt.
19. Messvorrichtung nach Satz 18, dadurch gekennzeichnet, dass Seitenflächen des Pyramidenstumpfes verspiegelt sind.
20. Messvorrichtung nach Satz 18 oder 19, dadurch gekennzeichnet, dass benachbart zu der Grundfläche des Pyramidenstumpfes ein Homogenisator (225) angeordnet ist.
21. Messvorrichtung nach Satz 20, dadurch gekennzeichnet, dass der Homogenisator (225) quaderförmig ist.
22. Messvorrichtung nach einem der Sätze 18 bis 21, gekennzeichnet durch eine Umformungseinrichtung, die eine Vielzahl optischer Fasern (214) umfasst, wobei erste Enden der optischen Fasern (214) über eine Fläche verteilt und zweite Enden der optischen Fasern entlang einer Linie verteilt angeordnet sind.
23. Messvorrichtung nach einem der vorangegangenen Sätze, dadurch gekennzeichnet, dass die Messvorrichtung eine zweite Empfangs- und Auswerteeinheit (98) umfasst, welche ausgebildet ist, um eine Abbildung des Messobjekts (6) zu erfassen.
24. Messvorrichtung nach einem der vorangegangenen Sätze, dadurch gekennzeichnet, dass die Messvorrichtung eine zweite Abbildungsoptik (105, 102, 9) umfasst, welche räumlich getrennt von der ersten Abbildungsoptik (4, 101, 5) ausgeführt ist, wobei die erste Abbildungsoptik und die zweite Abbildungsoptik je ein zusätzliches optisches Element (101, 102) umfassen, welches eine chromatische Fokusverschiebung quer zur optischen Achse einer Linse (5, 105) der jeweiligen Abbildungsoptik verursacht.
25. Messvorrichtung nach Satz 24, dadurch gekennzeichnet, dass die erste Abbildungsoptik dazu eingerichtet ist, Fokuspunkte unterschiedlicher Wellenlängen an unterschiedlichen Orten zu bilden, wobei die Orte entlang eines Liniensegments liegen, das einen spitzen Winkel zur optischen Achse einer Linse (5) der ersten Abbildungsoptik (4, 101, 5) bildet.

## Patentansprüche

1. Chromatisch-konfokale Messvorrichtung zur Messung von Abständen und/oder Dicken von mehreren Stellen simultan oder eines in mindestens eine Raumrichtung ausgedehnten Bereichs eines Messobjekts, umfassend
eine Lichtquelle (1), welche durch eine Lichtaustrittsfläche polychromatisches Messlicht (2) emittiert,
mindestens eine erste konfokale Apertur (3, 10), durch die das Messlicht (2) tritt, wobei die erste konfokale Apertur (3, 10) eine Mehrzahl von punktförmigen Öffnungen oder mindestens eine schlitzförmige Öffnung umfasst,
eine Abbildungsoptik (4, 5, 101), welche dazu eingerichtet ist, eine chromatische Fokusverschiebung des Messlichts hervorzurufen und die erste konfokale Apertur (3) in ein Messvolumen abzubilden, wobei verschiedene Wellenlängen in verschiedenen Höhen fokussiert sind,
eine erste Empfangs- und Auswerteeinheit (8), welche ausgebildet ist, um die Intensität des vom Messobjekt reflektierten Messlichts in Abhängigkeit der Wellenlänge und der transversalen Position der Reflexionsstelle auf dem Messobjekt zu messen und daraus Abstände und/oder Dicken von mehreren Stellen oder eines in mindestens eine Raumrichtung ausgedehnten Bereichs des Messobjekts (6) zu bestimmen,
**dadurch gekennzeichnet, dass**
die Lichtquelle (1) eine lasergepumpte Luminophor-basierte Lichtquelle ist und die Austrittsfläche (24) länglich ist.

2. Messvorrichtung nach Anspruch 1, **dadurch gekennzeichnet, dass** die Lichtquelle (1) mindestens eine Pumpquelle (20) umfasst, welche Pumplicht (21) emittiert und auf einen Luminophor richtet, der das Pumplicht (21) in polychromatisches Licht (23) umwandelt.

3. Messvorrichtung nach Anspruch 2, **dadurch gekennzeichnet, dass** das polychromatische Licht (23) anschließend durch einen Homogenisator (25; 324) tritt, derart, dass die Intensität des von der Austrittsfläche (24) austretenden Lichts (26) zumindest nahezu gleichmäßig verteilt ist.

4. Messvorrichtung nach Anspruch 3, **dadurch gekennzeichnet, dass** der Homogenisator (225) einen Abschnitt hat, der die Form eines Pyramidenstumpfes hat, der so angeordnet ist, dass das polychromatische Licht über die Deckfläche des Pyramidenstumpfes in den Abschnitt eintritt.

5. Messvorrichtung nach Anspruch 4, **dadurch gekennzeichnet, dass** Seitenflächen des Pyramidenstumpfes so geneigt sind, dass in dem Abschnitt geführtes polychromatisches Licht durch Totalreflexion in dem Homogenisator (225) geführt wird.

6. Messvorrichtung nach Anspruch 2, **dadurch gekennzeichnet, dass** das Pumplicht (31) von einem stabförmigen Luminophor (32) in polychromatisches Licht (33) umgewandelt wird, wobei durch eine Seitenfläche des stabförmigen Luminophors (32) austretendes Licht (33) als Messlicht verwendet wird.

7. Messvorrichtung nach einem der Ansprüche 2 bis 5, **dadurch gekennzeichnet, dass** der Luminophor (174) plattenförmig ist.

8. Messvorrichtung nach einem der Ansprüche 2 bis 5, **dadurch gekennzeichnet, dass** der Luminophor (183) einen kegelstumpfförmigen Abschnitt hat.

9. Messvorrichtung nach Anspruch 8, **dadurch gekennzeichnet, dass** der Abschnitt eine gekrümmte Außenfläche hat, die verspiegelt ist, und dass der Abschnitt so angeordnet ist, dass das Pumplicht über die Deckfläche des Kegelstumpfes in den Luminophor (183) eintritt.

10. Messvorrichtung nach einem der Ansprüche 2 bis 5, **dadurch gekennzeichnet, dass** der Luminophor (313) einen Abschnitt hat, der die Form eines Pyramidenstumpfes hat, der so angeordnet ist, dass das Pumplicht über die Deckfläche des Pyramidenstumpfes in den Abschnitt eintritt.

11. Messvorrichtung nach Anspruch 10, **dadurch gekennzeichnet, dass** Seitenflächen des Pyramidenstumpfes verspiegelt sind.

12. Messvorrichtung nach Anspruch 10 oder 11, **dadurch gekennzeichnet, dass** benachbart zu der Grundfläche des Pyramidenstumpfes ein Homogenisator (314) angeordnet ist.

13. Messvorrichtung nach einem der vorhergehenden Ansprüche, **dadurch gekennzeichnet, dass** die Lichtquelle eine Umformungseinrichtung aufweist, die dazu eingerichtet ist, eine Lichtverteilung so umzuformen, dass der Querschnitt der Lichtverteilung länglicher wird.

14. Messvorrichtung nach Anspruch 13, **dadurch gekennzeichnet, dass** die Umformungseinrichtung eine Anordnung von Lichtleitfasern (224; 315) umfasst.

15. Messvorrichtung nach einem der vorangegangenen Ansprüche, **dadurch gekennzeichnet, dass** die Messvorrichtung eine zweite Empfangs- und Auswerteeinheit (98) umfasst, welche ausgebildet ist, um eine Abbildung des Messobjekts (6) zu erfassen.

16. Messvorrichtung nach einem der vorangegangenen Ansprüche, **dadurch gekennzeichnet, dass** die Messvorrichtung eine zweite Abbildungsoptik (105, 102, 9) umfasst, welche räumlich getrennt von der ersten Abbildungsoptik (4, 101, 5) ausgeführt ist, wobei die erste Abbildungsoptik und die zweite Abbildungsoptik je ein zusätzliches optisches Element (101, 102) umfassen, welches eine chromatische Fokusverschiebung quer zur optischen Achse einer Linse (5, 105) der jeweiligen Abbildungsoptik verursacht.

17. Messvorrichtung nach Anspruch 16, **dadurch gekennzeichnet, dass** die erste Abbildungsoptik dazu eingerichtet ist, Fokuspunkte unterschiedlicher Wellenlängen an unterschiedlichen Orten zu bilden, wobei die Orte entlang eines Liniensegments liegen, das einen spitzen Winkel zur optischen Achse einer Linse (5) der ersten Abbildungsoptik (4, 101, 5) bildet.
